(19) Europäisches Patentamt
European Patent Office
Office européen des brevets

(11) **EP 2 506 556 A2**

(12) **EUROPEAN PATENT APPLICATION**

(43) Date of publication:
**03.10.2012 Bulletin 2012/40**

(51) Int Cl.:
***H04N 1/387*** *(2006.01)*

(21) Application number: **12161097.6**

(22) Date of filing: **23.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.03.2011 JP 2011078367**

(71) Applicant: **Panasonic Corporation**
**Osaka 571-8501 (JP)**

(72) Inventors:
• **Ogawa, Toshiyuki**
**Osaka-shi, Osaka 540-6207 (JP)**
• **Shirai, Naomi**
**Osaka-shi, Osaka 540-6207 (JP)**
• **Yamada, Taichi**
**Osaka-shi, Osaka 540-6207 (JP)**
• **Arimura, Minoru**
**Osaka-shi, Osaka 540-6207 (JP)**

(74) Representative: **Eisenführ, Speiser & Partner**
**Postfach 10 60 78**
**28060 Bremen (DE)**

(54) **Image processing apparatus and document scanning system having the same**

(57) Virtual straight lines (L1-L4) are parallelly shifted at regular intervals from starting points, which are four vertexes of a rectangular-shaped captured image, toward the center of the captured image, the virtual straight lines being tilted at an angle of a predetermined degree with respect to coordinate axes extending along two mutually orthogonally intersecting edges of the captured image. While doing so, intersection points between the virtual straight lines and outline elements are obtained. Based on the intersection points, angular points (Ca0, Cb0, Cc0, Cd0) of a contour of a document is obtained. Based on the angular points, a mesh model is generated.

Fig.1

**EP 2 506 556 A2**

**Description**

<u>CROSS-REFERENCE TO RELATED APPLICATIONS</u>

The present application claims priority under 35 U.S.C. §119 of Japanese Application No. 2011-078367, filed on March 31, 2011, the disclosure of which is expressly incorporated by reference herein in its entirety.

<u>BACKGROUND OF THE INVENTION</u>

1. <u>Field of the Invention</u>

The present invention is related to an image processing apparatus that processes an image scanned from a document such as a book, and a document scanning system having the image processing apparatus.

2. <u>Description of Related Art</u>

A book scanner (document camera) is widely used, which can capture, from above, a page of a book in a naturally opened state and scan an image of the page. Such a book scanner enables a user to sequentially scan images of pages while turning the pages, thereby making it possible to efficiently digitize books.

In capturing an image of a document using such a book scanner, it is critical to accurately detect, from the captured image, a contour of the document in order to appropriately obtain the image of the document. In relation to such a need, a technology is known in which an identification marking such as a diagonal line is provided to a surface of a platform on which the document is placed. Using the diagonal line, an area outside the document in the captured image is determined. Thereby, a document area is obtained (Japanese Patent Laid-open Publication No. 2006-211046).

The conventional technology, however, requires a platform specially provided with an identification marking. Further, in a case where there is dust attached to a surface of a desk on which a document is placed, there is a possibility that the dust causes an erroneous detection. Thus, it is necessary to carefully clean the desk surface so that no dust is attached thereto. Furthermore, erroneous detection may be caused by a design or the like on a surface of a desk. Therefore, the conventional technology is not necessarily convenient for a user.

<u>SUMMARY OF THE INVENTION</u>

The present invention has been devised to address the circumstances of the above-described conventional technology. A main advantage of the present invention is to provide an image processing apparatus and a document scanning system having the same, the document processing apparatus is configured to accurately detect a contour of a document causing less troubles to the user.

An image processing apparatus of the present invention includes a captured image obtainer obtaining a captured image that is an image of a paper surface of a document captured along with a placement surface and an image processor processing the captured image. The image processor includes: an outline element extractor extracting an outline element of the document from the captured image; an intersection point detector obtaining an intersection point between a virtual straight line and the outline element obtained by the outline element extractor, while parallelly shifting the virtual straight line at a predetermined shift interval, the virtual straight line being tilted at a predetermined angle with respect to coordinate axes extending along mutually orthogonally intersecting two edges of the rectangular-shaped captured image; an outline intersection point obtainer obtaining, as an outline intersection point, an intersection point located on an outermost side among the intersection points obtained by the intersection point detector; and an angular point obtainer obtaining an angular point of a contour of the document based on the outline intersection point obtained by the outline intersection point obtainer. The contour of the document is obtained based on the angular point obtained by the angular point obtainer.

A document scanning system of the present invention includes the above-described image processing apparatus and an image inputting device having a camera. The image inputting device captures an image of a document and transmits the captured image to the image processing apparatus.

According to the present invention, by shifting the virtual straight line tilting at a predetermined angle, a row of the intersection points appear so as to be substantially perpendicularly divided into two directions when the virtual straight line reaches at an angular point of the contour of the document. The angular point of the contour of the document can be accurately detected based on a state of the appearance of the intersection points. Further, it is also possible to accurately detect the contour of the document based on the angular point. In addition, the present invention requires no special platform. The present invention is also less affected by noise such as dust, design, or the like on a placement surface. Therefore, it is possible to enhance usability for a user causing less troubles to the user.

**2**

BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:

Fig. 1 illustrates an entire configuration of a document scanning system according to a present embodiment;
Fig. 2 is a block diagram illustrating schematic configurations of a book scanner and a PC;
Fig. 3 is a flowchart illustrating steps of document scanning in the present document scanning system;
Figs. 4A and 4B are schematic diagrams each illustrating a state of processing of the document scanning;
Figs. 5A and 5B are schematic diagrams each illustrating a state of processing of the document scanning;
Fig. 6 is a flowchart illustrating steps of angular point detection (ST103) shown in Fig. 3;
Fig. 7 is a schematic diagram illustrating a state of straight line element detection (ST201) shown in fig. 6;
Fig. 8 is a flowchart illustrating steps of document edge area obtainment (ST202) shown in Fig. 6;
Figs. 9A and 9B are schematic diagrams each illustrating a state of the document edge area obtainment (ST202) shown in Fig. 6;
Figs. 10A and 10B are schematic diagrams each illustrating a state of the document edge area obtainment (ST202) shown in Fig. 6;
Fig. 11 is a schematic diagram illustrating a state of intersection point detection (ST206) shown in Fig. 6;
Figs. 12A and 12B are schematic diagrams each illustrating a state of outline intersection point extraction (ST207) shown in Fig. 6;
Fig. 13 is a schematic diagram illustrating a state of the outline intersection point extraction (ST207) shown in Fig. 6;
Fig. 14 is a schematic diagram illustrating a state of angular point obtainment (ST208) shown in Fig. 6;
Figs. 15A to 15C are schematic diagrams each illustrating a state of the angular point obtainment (ST208) shown in Fig. 6;
Figs. 16A and 16B are schematic diagrams each illustrating a state of the angular point obtainment (ST208) shown in Fig. 6;
Figs. 17A and 17B are schematic diagrams each illustrating a state of the angular point obtainment (ST208) shown in Fig. 6;
Fig. 18 is a schematic diagram illustrating a state of angular point adequacy determination (ST209) shown in Fig. 6;
Fig. 19 is a schematic diagram illustrating a state of the angular point adequacy determination (ST209) shown in Fig. 6;
Fig. 20 is a flowchart illustrating steps of outline point obtainment (ST104) shown in Fig. 3;
Figs. 21A and 21 B are schematic diagrams each illustrating a sate of the outline point obtainment (ST104) shown in Fig. 3;
Fig. 22 is a schematic diagram illustrating a sate of the outline point obtainment (ST104) shown in Fig. 3;
Fig. 23 is a flowchart illustrating steps of mesh model generation (ST105) shown in Fig. 3; and
Figs. 24A and 24B are schematic diagrams each illustrating a stat of the mesh model generation (ST105) shown in Fig. 3.

DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

First Embodiment

Hereinafter, an embodiment of the present invention is described with reference to the drawings.

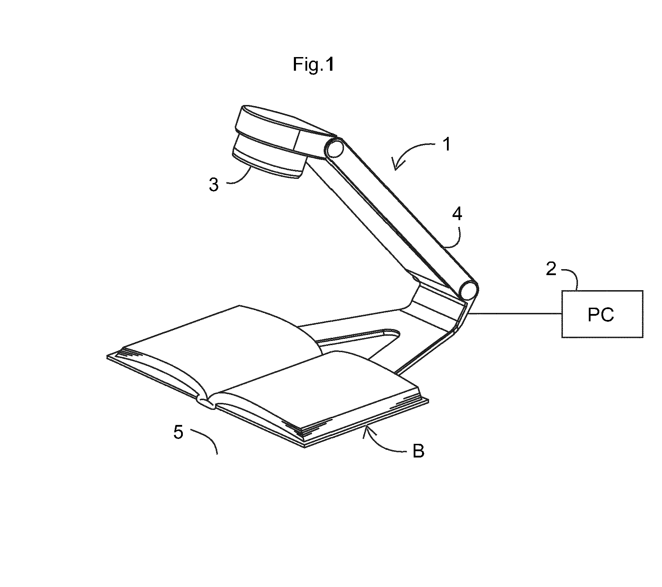

Fig. 1 illustrates an entire configuration of a document scanning system according to the present embodiment. The document scanning system scans an image of a paper surface of a book (document) B, and obtains image data of the paper surface. The document scanning system is configured with a book scanner (image inputting device) 1 and a PC (image processing apparatus) 2.
The book scanner 1 includes a camera 3 capturing an image of a paper surface of the book B and a stand 4 holding the camera 3. The stand 4 is mounted on a placing surface 5 such as a desk. The book B is placed on the placing surface 5 provided directly below the camera 3. The camera 3 captures an image of a paper surface of the book B. An image of a paper surface is captured in a state where the book B is naturally opened, and the captured image of a two-page spread of the book B is thus obtained. Further, planarization is performed on an image of a distorted paper surface in order to obtain a planarized image of the paper surface of the two-page spread.

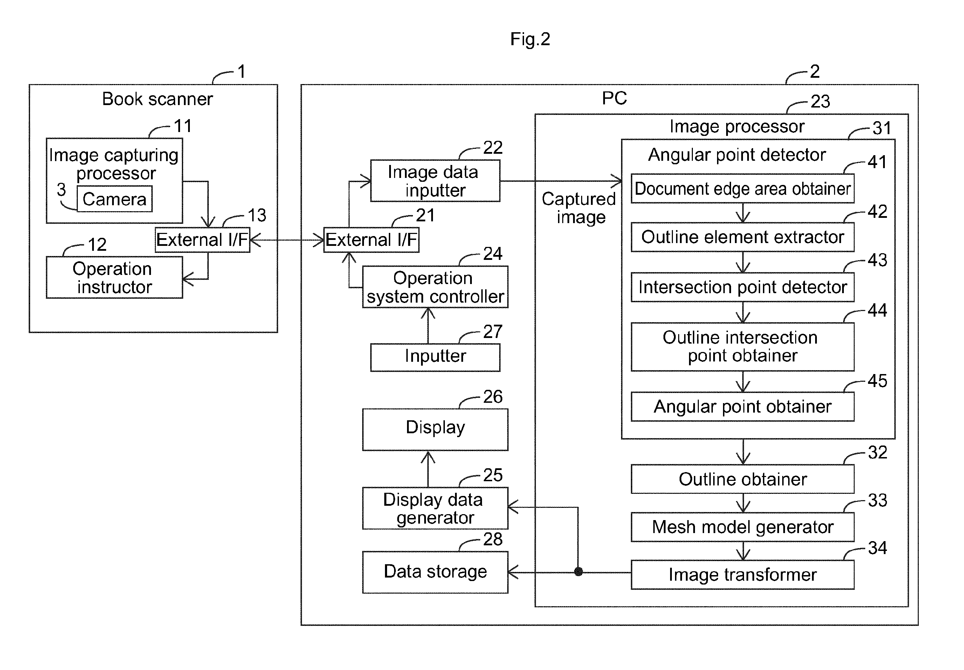

Fig. 2 is a block diagram illustrating schematic configurations of the book scanner 1 and the PC 2. The book scanner 1 includes an image capturing processor 11 having the camera 3, an operation instructor 12, and an external interface 13. The PC 2 includes an external I/F 21, an image data inputter (captured image obtainer) 22, an image processor 23, an operation system controller 24, a display data generator 25, a display 26, an inputter 27, and a data storage 28. The image processor 23 and the display data generator 25 of the PC 2 are achieved by software processing that a CPU executes with a program such as an image processing application or the like.

In the PC 2, operation conditions such as resolution, a frame rate, and the like of an image to be captured by the book scanner 1 are input with an operation through the inputter 27 configured with a keyboard or the like. These operation conditions are transmitted from the operation system controller 24 to the book scanner 1. In the book scanner 1, the image capturing processor 11 performs a predetermined operation according to an instruction from the operation instructor 12 based on the operation conditions transmitted from the PC 2.

The image data inputter 22 of the PC 2 stores, in a memory, image data transmitted from the book scanner 1, and outputs the image data to the image processor 23 as needed. The image data inputter 22 obtains a captured image of a document (paper surface of a book, in this example) B captured along with the placing surface 5.

The image processor 23 includes an angular point detector 31, an outline obtainer 32, a mesh model generator 33, and an image transformer 34. The angular point detector 31 includes a document edge area obtainer 41, an outline element extractor 42, an intersection point detector 43, an outline intersection point obtainer 44, and an angular point obtainer 45.

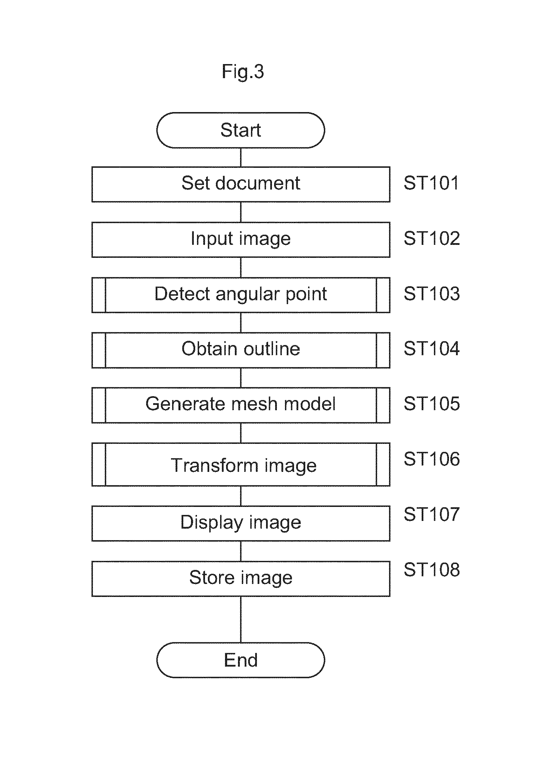

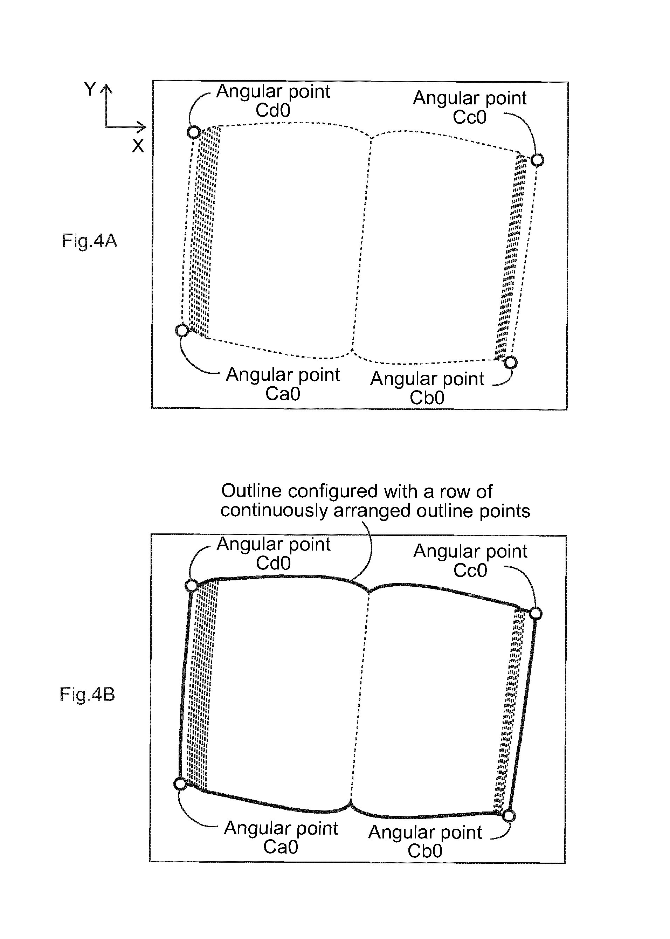

Fig. 3 is a flowchart illustrating steps of document scanning in the present document scanning system. Figs. 4A to 5B are schematic diagrams each illustrating a state of each type of processing of the document scanning.

First, a user sets a book (document) below the camera 3 of the book scanner 1 (ST101). Then, after the book scanner 1 and a predetermined application in the PC 2 are started, image input, that is, image capturing, is started by the book scanner 1, and the captured image data is transmitted to the PC 2 (ST102). The image data inputter 22 of the PC 2 obtains the captured image of a paper surface of the book B captured along with the placing surface 5.

In the PC 2, as shown in Fig. 4A, the angular point detector 31 detects angular points of a shape outline of the document from the captured image (ST103). Thereafter, as shown in Fig. 4B, based on the angular points detected by the angular point detector 31, the outline obtainer 32 obtains an outline of the book, that is, an outline configured with a row of continuously arranged pixels (ST104).

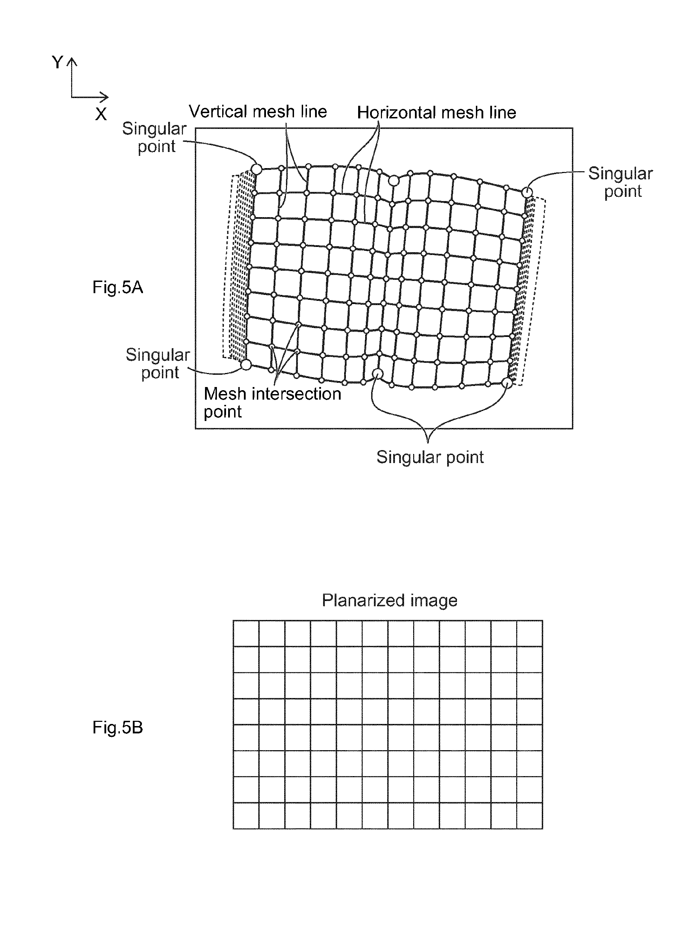

Thereafter, as shown in Fig. 5A, based on the outline information obtained by the outline obtainer 32, the mesh model generator 33 detects singular points, which are edge points at page top, bottom, left, and right. Based on the singular points, the mesh model generator 33 further generates a mesh model (ST105). Thereafter, as shown in Fig. 5B, based on the mesh model obtained by the mesh model generator 33, the image transformer 34 performs image transformation to planarize the image (ST106). In this embodiment, an image is planarized by projective transformation (affine transformation). Thereby, it is possible to obtain an image similar to what is scanned by a flat bed scanner.

The planarized image obtained above is displayed on the display 26 (ST 107). Thereby, the user can confirm whether or not the image has been properly cut out. The planarized image data is stored in the data storage 28 (ST108).

[Angular point detection]

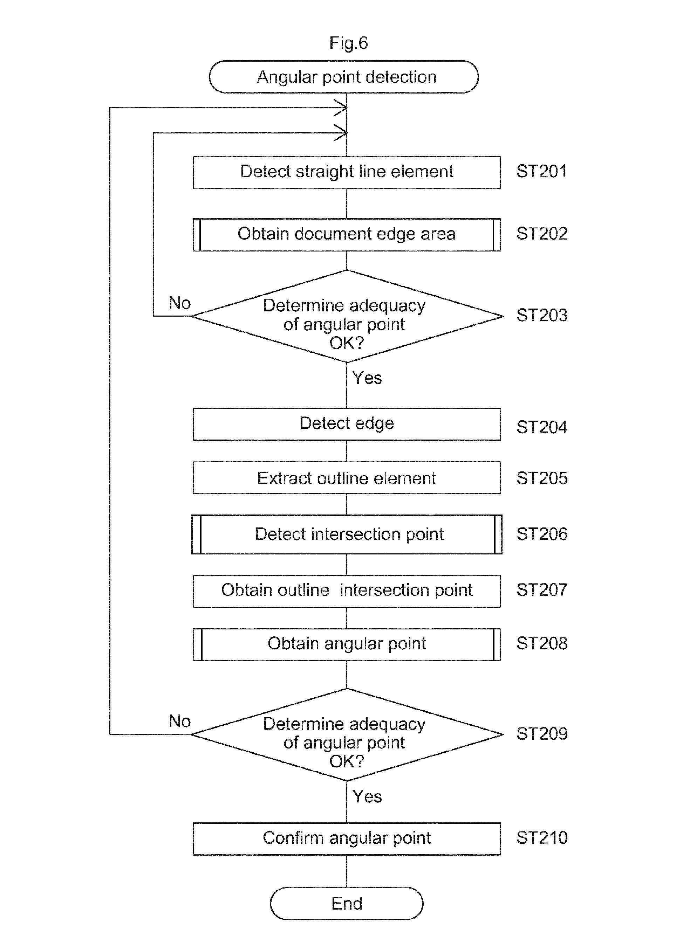

Next, the angular point detection (ST103) shown in Fig. 3 is described in detail. Fig. 6 is a flowchart illustrating steps of the angular point detection.

As shown in Fig. 4A, the angular point detector 31 shown in Fig. 2 detects, from the captured image, four angular points (corners of a front page in general, in a case of a book) Ca0, Cb0, Cc0, and Cd0 of the contour of the document. As described in detail in the following, each type of processing: straight line element detection (ST201), document edge area detection (ST202), document edge area adequacy determination (ST203), edge detection (ST204), outline element extraction (ST205), intersection point detection (ST206), outline intersection point obtainment (ST207), angular point extraction (ST208), and angular point adequacy determination (ST209) is sequentially performed. When the angular points are determined as adequate, the angular points are confirmed. The coordinates of the angular points are then recorded (ST210).

(Straight line element detection)

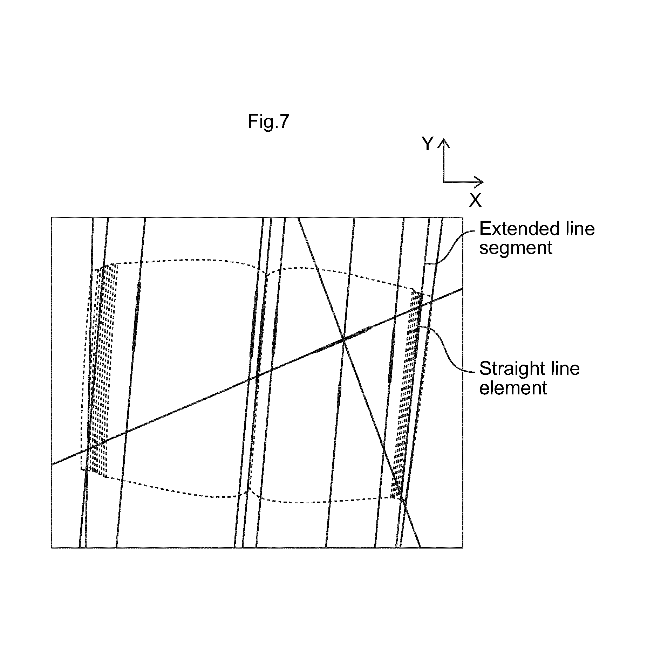

First, the straight line element detection (ST201) shown in Fig. 6 is described in detail. Fig. 7 is a schematic diagram illustrating a state of the straight line element detection. This processing is performed by the document edge area obtainer 41 shown in Fig. 2.

Herein, straight line elements (linearly arranged pixels) within the captured image are detected. This straight line element detection may be performed by the Hough transformation. Thereafter, the detected straight line elements are extended to edges of the captured image to obtain extended straight line segments. In this embodiment, only the straight line elements having a length longer than a predetermined length are selected to obtain the extended straight line segments.

(Document edge area obtainment)

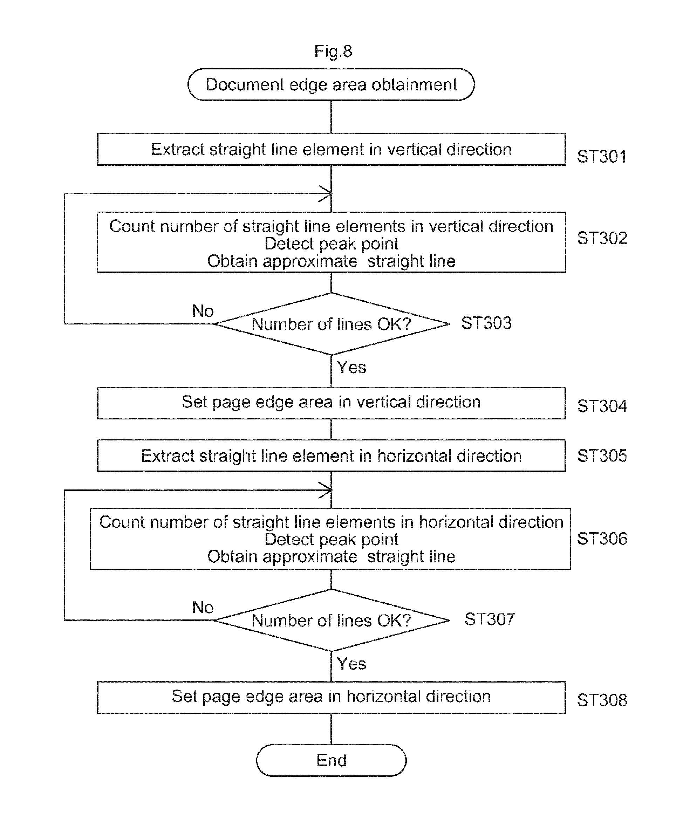

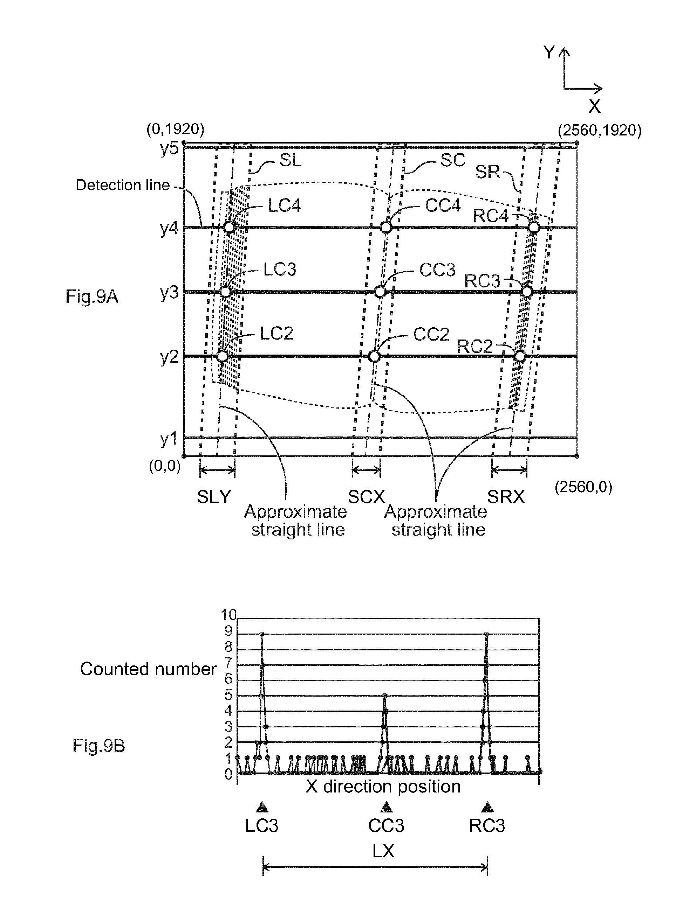

Next, the document edge area obtainment (ST202) shown in Fig. 6 is described. Fig. 8 is a flowchart illustrating steps of the document edge area obtainment. Figs. 9A to 10B are diagrams each illustrating a state of the document edge area obtainment. This processing is performed by the document edge area obtainer 41 shown in Fig. 2.

The processing here obtains, from the captured image, edges of the document, specifically, document edge areas in which the contour of the book, edges of a page, and a binding of pages are estimated to exist. Although document edge areas in a vertical direction are first detected and document edge areas in a horizontal direction are then detected in the example shown in Fig. 8, this order may be reversed.

Detection of the document edge areas extending in the vertical direction is first explained. First, of the extended straight line segments obtained in the straight line element detection (ST201) shown in Fig. 6, extended straight line segments in the vertical direction is extracted (ST301). In this embodiment, the extended straight line elements in the vertical direction are extended in the vertical direction (top-bottom direction of the paper surface of the book). In other words, the extended straight line segments in the vertical direction are extended at an angle of 45 to 90 degrees with respect to upper and lower edges of the captured image.

Then, as shown in Fig. 9A, on detection lines extended in the X direction at predetermined Y direction positions y1 to y5, the number of the passing extended straight line segments in the vertical direction is counted for every counting section having a predetermined width (25 pixels, for example) (ST302). Fig. 9 illustrates an example of a 2,560 x 1,920 pixel image. For example, Y coordinates of the Y direction positions y1 to y5 are 100, 600, 1,000, 1,400, and 1,900, respectively.

Thereafter, as shown in Fig. 9B, at each of the Y direction positions y1 to y5, peak points LC1 to LC5, CC1 to CC5, and RC1 to RC5, at which the counted number of the extended straight line segments becomes greatest, are obtained. Approximate straight lines passing through the peak points LC1 to LC5, CC1 to CC5, and RC1 to RC5 are then obtained. Thereafter, it is determined whether or not the number of the approximate straight lines is adequate (ST303). As shown in Figs. 9A and 9B, in a case of a two-page spread of a book, three peak points appear in the X direction, and three approximate straight lines are formed. In a case of a cover page of a book or a sheet document, two peak points appear in the X direction, and two approximate straight lines are formed.

The approximate straight lines obtained here become centerlines of the document edge areas. Using the centerlines as references, document edge areas SL, SC, and SR extending in the vertical direction are set (ST304). The document edge areas SL, SC, and SR each have two sides (upper side and lower side), which are an upper edge and a lower edge of the captured image. The document edge areas SL, SC, and SR form parallelograms each having predetermined widths SLX, SCX, and SRX, respectively, in the X direction around the approximate straight lines as centerlines. A left document edge area SL and a right document edge area SR are areas in which left and right edges of a cover page or page of a book exist. A central document edge area SC is an area in which a binding of pages exists.

The widths SLX, SCX, and SRX in the X direction of the document edge areas SL, SC, and SR are set based on a distance LX in the X direction between the left peak points LC1 to LC5 and the right peak points RC1 to RC5. In this embodiment, the widths SLX, SCX, and SRX have values obtained by multiplying the distance LX by an experimentally determined predetermined ratio. For example, the widths SLX and SRX in the X direction of the document edge areas SL and SR are 1/8 of the distance LX, and the width SCX in the X direction of the central document area SC is 1/10 of the distance LX.

In addition, the widths SLX and SRX in the X direction of the left and right document edge areas SL and SR vary depending on the number of pages of a book. Thus, they may be calculated based on a measurement result. Furthermore, by comparing the value calculated based on the measurement result with the value calculated with the ratio with respect to the distance LX, a greater value between the two may be selected.

In this case, the widths SLX and SRX in the X direction of the left and right document edge areas SL and SR are set to be predetermined multiples (two times, for example) of the width in the X direction of an area having the counted number more than or equal to a predetermined threshold value at positions before or after the peak points LC1 to LC5 and RC1 to RC5, for example. In this embodiment, the threshold value may be a value obtained by multiplying the counted number (greatest value) at the peak points LC1 to LC5 and RC1 to RC5 by a predetermined ratio (50%, for example).

Furthermore, in a case of a small book, an image of the book becomes small in the captured image. Accordingly, there may be a case where there are few significant peak points, and it thus becomes difficult to properly extract the document edge areas SL, SC, and SR. In such a case, a calculation is performed again with modified Y direction positions y1 to y5. For example, the Y coordinates of the Y direction positions y1 to y5 each are set as 300, 800, 1,000, 1,200, and 1,700. In this example, a central portion of the Y direction has smaller spacing.

Further, in this embodiment, five Y direction positions (positions of the detection lines) are set in order to detect the peak points. However, the number of detection positions is not limited to this, and may be two, for example. Further, the detection position may be one of the centers in the Y direction (Y = 1,000, for example). Furthermore, in a preliminary detection for showing a user a state of processing, a smaller number of detection positions (two, for example) may be set. Then, in a real detection for generating an image to be eventually stored, a larger number of detection positions may be set so that accurate detection is ensured.

Next, detection of the document edge area extending in the horizontal direction is described. First, of the extended straight line segments obtained by the straight line element detection (ST201) shown in Fig. 6, extended straight line segments in the horizontal direction are extracted (ST305). In this embodiment, the extended straight line elements in the horizontal direction are extended in the horizontal direction (left-right direction of the paper surface of the book). In other words, the extended straight line segments in the horizontal direction are extended at an angle of 0 to 45 degrees with respect to the upper and lower edges of the captured image.

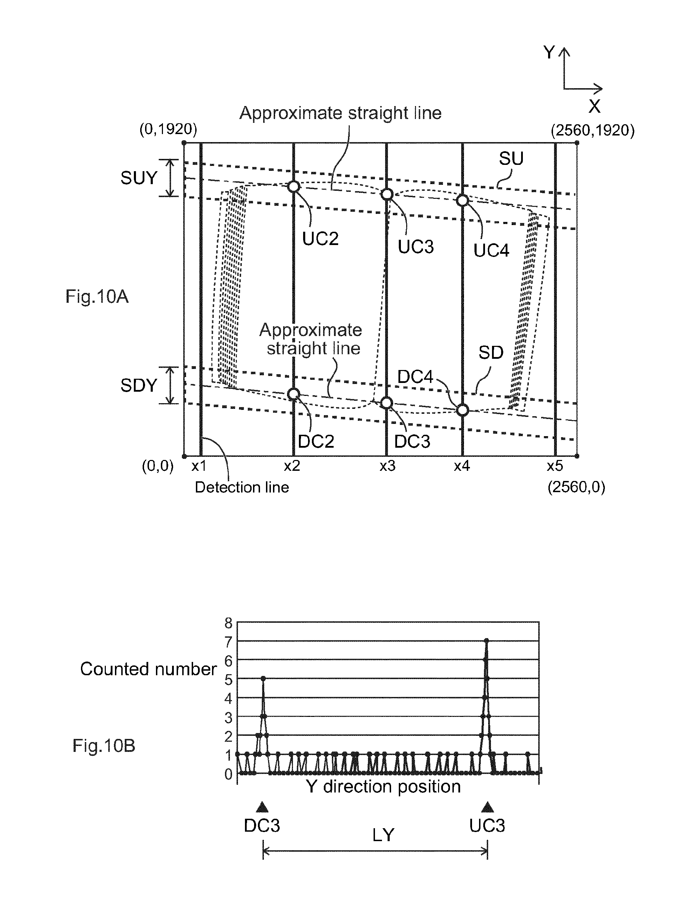

Thereafter, as shown in Fig. 10A, on detection lines extending in the Y direction at predetermined X direction positions x1 to x5, the number of the passing extended straight line segments in the horizontal direction is counted for every counting section having a predetermined width (25 pixels, for example) (ST306). Figs. 10A and 10B illustrate an example of a 2,560 x 1,920 pixel image. For example, X coordinates of the X direction positions x1 to x5 each are set as 100, 700, 1,300, 1,800, and 2,400, respectively.

Thereafter, as shown in Fig. 10B, at each of the X direction positions x1 to x5, peak points UC1 to UC5 and DC1 to DC5, at which the counted number of the extended straight line segments become greatest, are obtained. Then, approximate straight lines passing through the peak points UC1 to UC5 and DC1 to DC5 are obtained. Thereafter, it is determined whether or not the number of the approximate straight lines are adequate (ST307). As shown in Figs. 10A and 10B, in a case of a two-page spread of a book, two peak points appear in the Y direction, and two approximate straight lines are formed. Also in a case of a cover page of a book or a sheet document, two peak points appear in the Y direction, and two approximate straight lines are formed.

The approximate straight lines obtained here become centerlines of the document edge areas. Using these centerlines as references, document edge areas SU and SD extending in the horizontal direction are set (ST308). The document edge areas SU and SD each have two sides (left side and right side), which are a left edge and a right edge of the captured image. The document edge areas SU and SD form parallelograms each having predetermined widths SUY and SDY, respectively, around the approximate straight lines as centerlines. The document edge areas SU and SD are areas in which upper and lower edges of a cover page or page of a book exist.

The widths SUY and SDY in the Y direction of the document edge areas SU and SD are set based on a distance LY in the Y direction between the upper peak points UC1 to UC5 and the lower peak points DC1 to DC5. In this example, the widths SUY and SDY are set to values obtained by multiplying the distance LY by an experimentally determined predetermined ratio, for example, 1/7 of the distance LY.

In addition, the widths SUY and SDY in the Y direction of the document edge areas SU and SD are affected by an amount of distortion of an opened paper and also vary depending on a book size or the number of pages. Thus, they may be calculated based on a measurement result. Furthermore, by comparing the value calculated based on the measurement result with the value calculated with the ratio with respect to the distance LY, a greater number between the two may be selected.

In this case, the widths SUY and SDY in the Y direction of the document edge areas SU and SD may be predetermined multiples (three times, for example) of the width in the Y direction of the area having the counted number more than or equal to a predetermined threshold value at a position before or after the peak points UC1 to UC5 and DC1 to DC5, for example. In this embodiment, the threshold value may be a value obtained by multiplying the counted number (greatest value) at the peak points UC1 to UC5 and DC1 to DC5 by a predetermined ratio (66%, for example).

Furthermore, in a case of a small book, an image of the book becomes small in the captured image. Accordingly, there may be a case where there are few significant peak points, and thus it becomes difficult to properly extract the document edge areas SU and SD. In such a case, a calculation is performed again with modified X direction positions x1 to x5. For example, the X coordinates of the X direction positions x1 to x5 are set as 500, 950, 1,300, 1,750, and 2,000. In this example, a central portion of the X direction has smaller spacing.

Further, in this embodiment, five X direction positions (positions of the detection lines) are set in order to detect the peak points. However, the number of detection positions is not limited to this, and may be two, for example. Furthermore, in a preliminary detection for showing a user a state of processing, a smaller number of detection points (two, for example) may be set. Then, in a real detection for generating an image to be eventually stored, a larger number of detection positions may be provided so that accurate detection is ensured.

Descriptions have been provided to the case of a two-page spread, using an example where an image of a book is captured while the book being opened to left and right directions. There is also a case where an image of a book is captured while the book being opened to up and down directions. In such a case, the vertical direction and the horizontal direction are reversed from the above-described example. Accordingly, two document edge areas extending in the vertical direction shown in Figs. 9A and 9B are extracted, and three document edge areas extending in the horizontal direction shown in Figs. 10A and 10B are extracted.

Further, an optimum value for the width of the document edge area varies depending on a book size or the number of pages. The value shown in this embodiment is an empirical value assuming general users. When types of books (documents) are not common, there is a possibility that proper processing is not performed. In such a case, the optimum value may be changed by a user as needed, or may be changed according to statistics based on an assessment function (that minimizes the variance at the angular point positions, for example) using values obtained by processing a plurality of captured images.

Furthermore, in the present embodiment, the document edge areas are set based on the peak points that have the greatest counted numbers of the extended straight line segments on the detection lines. Alternatively, a threshold value may be set for the counted number of the extended straight line segments, and the document edge area may be set with the number of areas exceeding the threshold value. When the number of the document edge areas does not have an appropriate value (three, in the example shown in Fig. 9), it is possible to set the appropriate number of the document edge areas by adjusting the threshold value. Herein, the threshold value is set based on the distribution of values for the counted number of the extended straight line segments. For example, 50% of the third greatest value among the counted number values of the extended straight line segments may be set as the threshold value.

In addition, when there is a table on a paper surface of a book, lines of the table are detected as straight line elements. Thus, a great number of peak points appear in the middle area. In this case, first, the left and right document edge areas are set based on the peak points appearing on the both edges. Then, the width (pixel numbers) of the counting sections for counting the number of the extended straight line segments on the detection lines are modified. With the modified number, counting of the extended straight line segments on the detection lines is performed. At this time, for example, with the width of the counting sections being reduced (five pixels, for example), the counted number for the area having only one extended straight line segment may be excluded from the processing. In addition, with the width of the counting sections being increased (30 pixels, for example), the predetermined number (two in the example shown in Fig. 10) of areas may be sequentially extracted from those having the greatest counting number value.

(Document edge area adequacy determination)

Next, the document edge area adequacy determination (ST203) shown in Fig. 6 is described. This processing is performed by the document edge area obtainer 41 shown in Fig. 2.

Herein, adequacy of the document edge areas obtained by the document edge area obtainment (ST202) shown in Fig. 6 is determined based on positions where the peak points appear. When a two-page spread of a book is scanned, a total of three peak points appear at the left and right edges and the central area. These three peak points have substantially equal spacing among one another. In a case where this condition is not met, it is determined that the obtained document edge areas are not adequate.

More specifically, when a peak point CC, which is the center indicating a binding, does not exist, it is determined as not adequate. Accordingly, the process returns to the straight line element detection (ST201) shown in Fig. 6, and the straight line element detection is performed again with a modified threshold value.

Further, in comparison between a distance between a left peak point LC and the central peak point CC and a distance between the central peak point CC and a right peak point RC, when a difference between these two is greater than a predetermined value, it is determined as not adequate. Accordingly, the process returns to the document edge area obtainment (ST202) shown in Fig. 6, and the document edge area obtainment is performed again with modified positions of the detection lines for counting the extended straight line element. Thereby, it is possible to avoid erroneously detecting the central peak point CC due to the lines of the table drawn on the paper surface. Furthermore, when the difference of the distances is not decreased even after the document edge area obtainment is repeated for the predetermined number of times with modified positions of the detection lines, the process returns to the straight line element detection (ST201) shown in Fig. 6.

(Edge detection)

Next, the edge detection (ST204) shown in Fig. 6 is described. This processing is performed by the outline element extractor 42 shown in Fig. 2.

Herein, edge detection is performed with respect to the captured image in order to extract an edge element. This edge detection may be performed using the Canny method. Herein, when a threshold value is small, noise is increased. By contrast, when a threshold value is great, fragmented edge elements are increased. Thus, the threshold value is modified based on a detection result to optimize the performance of the edge detection. In this case, a total length and the number of continuous edge elements having a predetermined length or more, and a total length of continuous edge elements having a predetermined width or less are used as assessment references to learn a threshold value having the greatest assessment reference value.

(Outline element extraction)

Next, the outline element extraction (ST205) shown in Fig. 6 is described. This processing is performed by the outline element extractor 42 shown in Fig. 2.

Herein, outline elements (pixels configuring the outline of the document) within the edge image is extracted, the edge image having been obtained by the edge detection (ST204) shown in Fig. 6. Fragmented small edge elements are then removed as noise. In addition, missing outline elements are interpolated. At this time, determination on continuousness is performed based on the direction and length of the outline elements and the length of the gap. The outline elements determined as broken are interpolated.

(Intersection point detection)

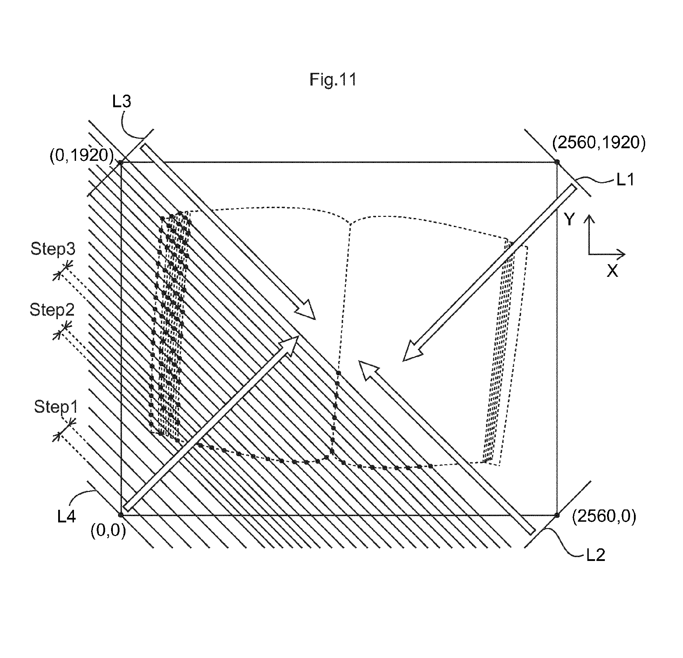

Next, the intersection point detection (ST206) shown in Fig. 6 is described. Fig. 11 is a schematic diagram illustrating a state of the intersection point detection. This processing is performed by the intersection point detector 43 shown in Fig. 2.

Herein, virtual straight lines L1 to L4 are tilted at a predetermined angle with respect to the coordinate axes (X axis and Y axis) extending along mutually orthogonally intersecting two sides of the rectangular-shaped captured image. The virtual straight lines L1 to L4 are parallelly shifted from starting points, which are four vertexes of the captured image, toward the center of the captured image at predetermined shift intervals gradually. Thereby, intersection points between the outline elements (pixels configuring the contour of the book) and the virtual straight lines L1 to L4 are collected, the outline elements having been extracted by the outline element extraction (ST205) shown in Fig. 6. This shifting of the virtual straight lines L1 to L4 is continued until the virtual straight lines L1 to L4 reach either one of two vertexes located in the X direction and the Y direction with respect to the vertex being the starting point.

The virtual straight lines L1 to L4 each form an angle of $\pm 45$ degrees with respect to both the X axis and the Y axis. More specifically, the first virtual straight line L1 starting from an upper right vertex (2560,1920) is tilted at an angle of -45 degrees with respect to the X axis. The second virtual straight line L2 starting from a lower right vertex (2560,0) is tilted at an angle of +45 degrees with respect to the X axis. The third virtual straight line L3 starting from an upper left vertex (0,1920) is tilted at an angle of +45 degrees with respect to the X axis. The fourth virtual straight line L4 starting from a lower left vertex (0,0) is tilted at an angle of -45 degrees with respect to the X axis

The example here shows a case where there are 2,560 pixels in the X direction and 1,920 pixels in the Y direction. In this case, the virtual straight lines L1 to L4 are each expressed by the following formulas, respectively.

$$\text{L1: } y = -x + 4{,}480 - \text{Step} \times (N-1)$$

$$\text{L2: } y = +x - 2{,}560 - \text{Step} \times (N-1)$$

$$\text{L3: } y = +x + 1{,}920 - \text{Step} \times (N-1)$$

$$\text{L4: } y = -x + \text{Step} \times (N-1)$$

Herein, Step is a shift interval of the virtual straight lines, and N is a line number. The line number is 1 at the starting point and increases by one as the virtual straight line is parallelly shifted at the shift interval Step.

Especially, in this embodiment, the shift intervals Step of the virtual straight lines L1 to L4 are changed before and after detection of an intersection point. Specifically, from the starting point until the detection of the intersection points, the virtual straight lines L1 to L4 are greatly shifted at a first shift interval Step 1. After the detection of the intersection point, the virtual straight lines are minutely shifted at a second shift interval Step 2 from the position immediately before the detected intersection point. This shifting at the second shift interval Step 2 is performed for the predetermined number of times. Thereafter, the virtual straight lines are shifted at a third shift interval Step 3 having a length between the first shift interval Step 1 and the second shift interval Step 2.

The shift interval Step of the virtual straight line is changed in three steps as described above, and the relationship among the first shift interval Step 1, the second shift interval Step 2, and the third shift interval Step 3 is expressed by the following formula.

$$\text{Step } 1 > \text{Step } 3 > \text{Step } 2$$

More specifically, the first shift interval Step 1 is equal to 50, and the virtual straight line in this case parallelly shifts in the X direction by 50 pixels. The second shift interval Step 2 is equal to 4, and the virtual straight line in this case parallelly shifts in the X direction by 4 pixels. The third shift interval Step 3 is equal to 10, and the virtual straight line in this case parallelly shifts in the X direction by 10 pixels. Shifting of the virtual straight line at the second interval Step 2 is equivalent to shifting by 50 virtual straight lines.

As described above, while parallelly shifting the tilted virtual straight line at predetermined shift intervals gradually, the intersection points between the outline elements and the virtual straight line are collected. When the virtual straight line reaches the angular point of the contour of the document, a row of intersection points appears so as to be substantially orthogonally divided into two directions. Based on a state of the appearance of the intersection points, the angular point of the contour of the document is accurately detected. In particular, by minutely shifting the virtual straight lines L1 to L4 at the second shift interval Step 2 after the intersection points are detected, it is possible to improve the accuracy.

(Outline intersection point obtainment)

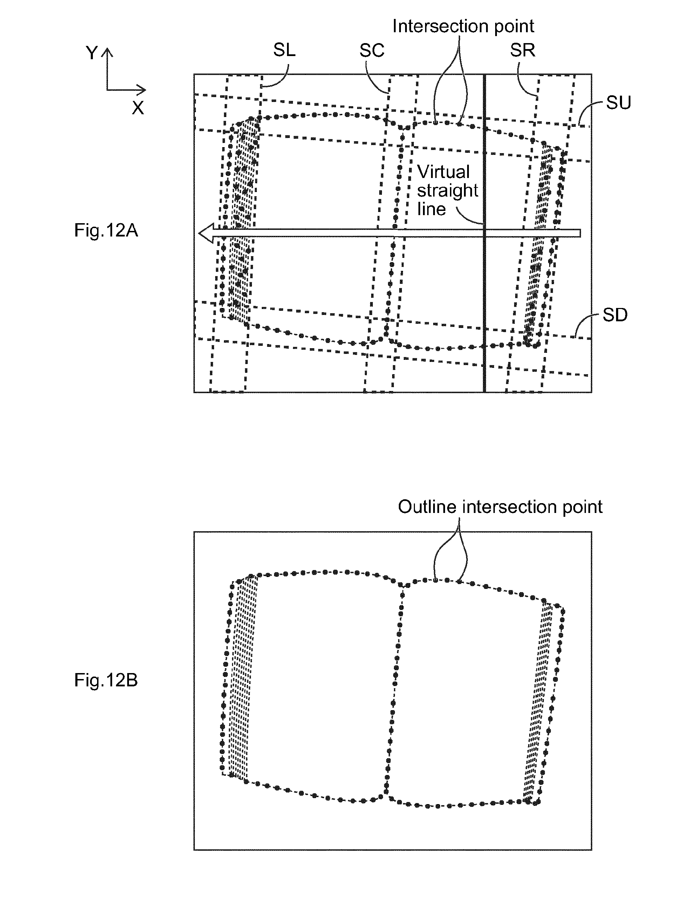

Next, the outline intersection point obtainment (ST207) shown in Fig. 6 is described. Figs. 12A to 13 are schematic diagrams each illustrating a state of outline intersection point extraction. This processing is performed by the outline intersection point obtainer 44 shown in Fig. 2.

Herein, of the intersection points obtained by the intersection point detection (ST206) shown in Fig. 6, an intersection point located on an outermost side is extracted as an outline intersection point. At the same time, of the extracted outline intersection points, outline intersection points determined as noise are removed.

First, as shown in Fig. 12A, from the intersection points having been obtained by the intersection point detection (ST206) shown in Fig. 6, intersection points located in the left and right document edge areas SL and SR and the upper and lower document edge areas SU and SD are extracted, the left and right document edge areas SL and SR and the upper and lower document edge areas SU and SD having been detected by the document edge area detection (ST202) shown in Fig. 6. Then, intersection points located outside the document edge areas SL, SR, SU, and SD are removed as noise.

Next, from the intersection points within the document edge areas SL, SR, SU, and SD, intersection points configuring the outline of the book are extracted. Herein, the virtual straight line in the Y direction is parallelly shifted from one end (position where the X coordinate has the greatest value of 2,560) of the captured image toward the other end (position where the X coordinate is 0). At this time, one or two intersection points that overlap with the virtual straight line are extracted. In a case where a plurality of intersection points is detected at one position on the virtual straight line, two points each of which has the greatest or the smallest Y coordinate, respectively, are extracted as the outline intersection points. Thereby, as shown in Fig. 12B, the intersection points located on outermost sides in the Y direction are extracted as the outline intersection points. Further, similarly, the virtual straight line in the X direction is parallelly shifted from one end (position where the Y coordinate has the greatest value of 1,920) of the captured image toward the other end (position where the Y coordinate is 0). While doing so, two outline intersection points each of which has the greatest or the smallest X coordinate, respectively, are extracted from the intersection points. In a case where there is only one intersection point on one line, this one intersection point is extracted as an outline intersection point.

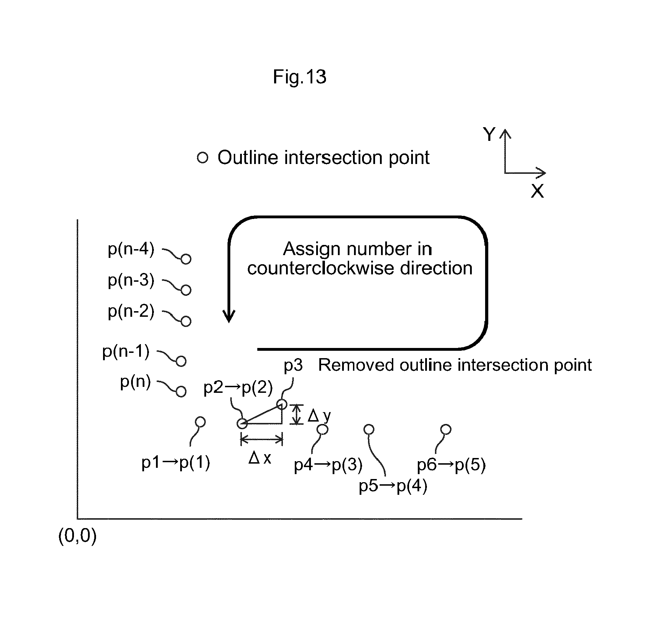

Thereafter, outline intersection points that are determined as noise are removed from the extracted outline intersection points. Herein, as shown in Fig. 13, the outline intersection points are sequentially assigned numbers p1, p2, p3, ..., and pn from the one closest to the origin (0,0) in a counterclockwise direction, and are then stored in an outline intersection point table. Thereafter, a difference $\Delta x$ of the X coordinates and a difference $\Delta y$ of the Y coordinates of two adjacent outline intersection points are obtained. Further, using a greater value between the difference $\Delta x$ of the X coordinates and the difference $\Delta y$ of the Y coordinates as a denomination, a ratio $\Delta y/\Delta x$ (given $\Delta x > \Delta y$) or a ratio $-\Delta x/\Delta y$ (given $\Delta y > \Delta x$) is calculated as a shift amount ratio Sp. By comparing the shift amount ratio Sp with closest two points, outline intersection points having a difference of a predetermined ratio or more are removed. For example, an average of the predetermined number of the shift amount ratio in a vicinity is calculated. Then, outline intersection points having a ratio of a difference with respect to the average more than or equal to a predetermined threshold value (15%, for example) are removed.

In addition, there is a case where the shift amount ratio Sp at a corner is greater than that at a side because of characteristics that polarity (+,-) of the shift amount ratio Sp changes. Thus, a set value (three, for example) different from the above-described calculated average may be used as a threshold value.

In the example shown in Fig. 13, the shift amount ratio Sp ($\Delta$y/$\Delta$x) greatly changes at the outline intersection point p3, and the outline intersection point p3 is thus removed as noise. Accordingly, the outline intersection points p4 and after in the outline intersection point table are renumbered.

(Angular point obtainment)

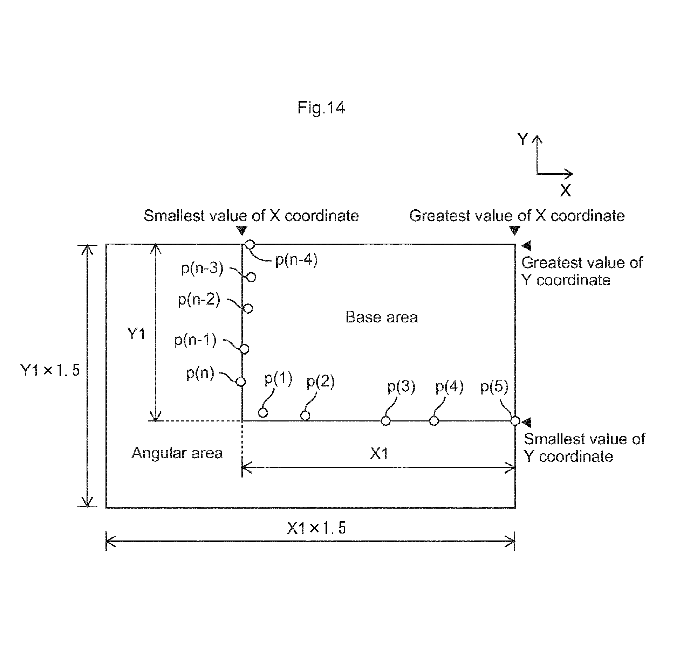

Next, the angular point obtainment (ST208) shown in Fig. 6 is described. Figs. 14 to 17B are schematic diagrams each illustrating a state of the angular point obtainment. This processing is performed by the angular point obtainer 45 shown in Fig. 2.

Herein, based the outline intersection points having been obtained by the outline intersection point obtainment (ST207) shown in Fig. 6, four angular points of the contour of the document are obtained. Although an explanation hereinafter is provided for an example where a lower left angular point is obtained, the other three angular points are also obtained in a similar manner.

First, as shown in Fig. 14, of the outline intersection points p(1) to p(n) having been obtained by the outline intersection point extraction (ST207) shown in Fig. 6, the predetermined number of outline intersection points that are estimated to be located at corners of the book are selected. In the shown example, a total of ten outline intersection points, five for each of the two edges (lower edge and left edge), are selected. The number of outline intersection points are not limited to a specific number and may be increased as needed.

Thereafter, temporary angular areas where the angular points are expected to exist are set. In a case where an angular point Ca0 is calculated, an angular area SLSD where the document edge area SL and the document edge area SD are overlapped is set. Alternatively, an area that is the enlarged or reduced angular area SLSD may be set. Herein, first, based on the polarity of the shift amount ratio Sp, the outline intersection points p(1) and p(n) are selected. Then, a smallest value and a greatest value for each of the X coordinate and the Y coordinate are obtained from a total of ten outline intersection points, five intersection points being selected from each of the vertical edge and the horizontal edge including the above-described two intersection points. Thereafter, a rectangular-shaped base area defined by the smallest value and the greatest value for each of the X coordinate and the Y coordinate is set. Thereafter, by enlarging the base area with a predetermined magnification (1.5 times, for example) to the side where the angular points exist, a rectangular-shaped angular area is set. In the example shown in Fig. 14 in which the lower left angular point is extracted, the angular area is enlarged to a side where the X coordinate and the Y coordinate become smaller with respect to the base area.

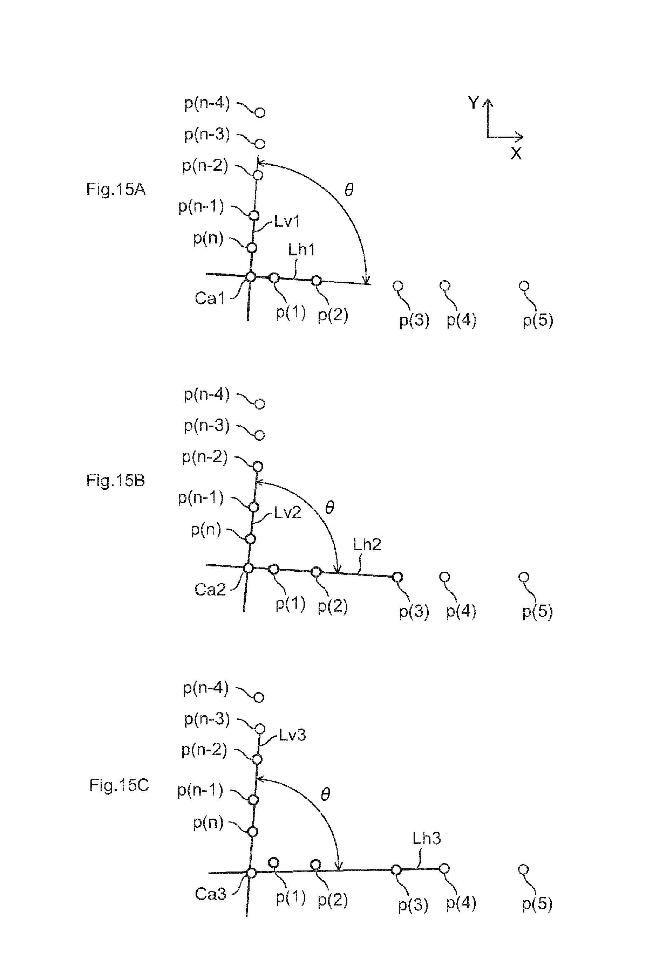

Thereafter, as shown in Figs. 15A to 15C, straight lines for angular point estimation passing through the adjacent two outline intersection points p(1) to p(n) are sequentially obtained. In the shown example, there are five intersection points for each of the vertical and the horizontal directions. Accordingly, four horizontal-direction straight lines for angular point estimation Lh and four vertical-direction straight lines for angular point estimation Lv are each obtained. In Fig. 15A, a horizontal-direction straight line for angular point estimation Lh1 passing through the outline intersection points p(1) and p(2), and a vertical-direction straight line for angular point estimation Lv1 passing through the outline intersection points p(n) and p(n-1) are obtained. In Fig. 15B, a horizontal-direction straight line for angular point estimation Lh2 passing through the outline intersection points p(2) and p(3), and a vertical-direction straight line for angular point estimation Lv2 passing through the outline intersection points p(n-1) and p(n-2) are obtained. In Fig. 15C, a horizontal-direction straight line for angular point estimation Lh3 passing through the outline intersection points p(3) and (4), and a vertical-direction straight line for angular point estimation Lv3 passing through the outline intersection points p(n-2) and p(n-3) are obtained. Although not shown in the drawings, similarly, a horizontal-direction straight line for angular point estimation Lh4 passing through the outline intersection points p(4) and p(5), and a vertical-direction straight line for angular point estimation Lv4 passing through the outline intersection points p(n-3) and p(n-4) are obtained.

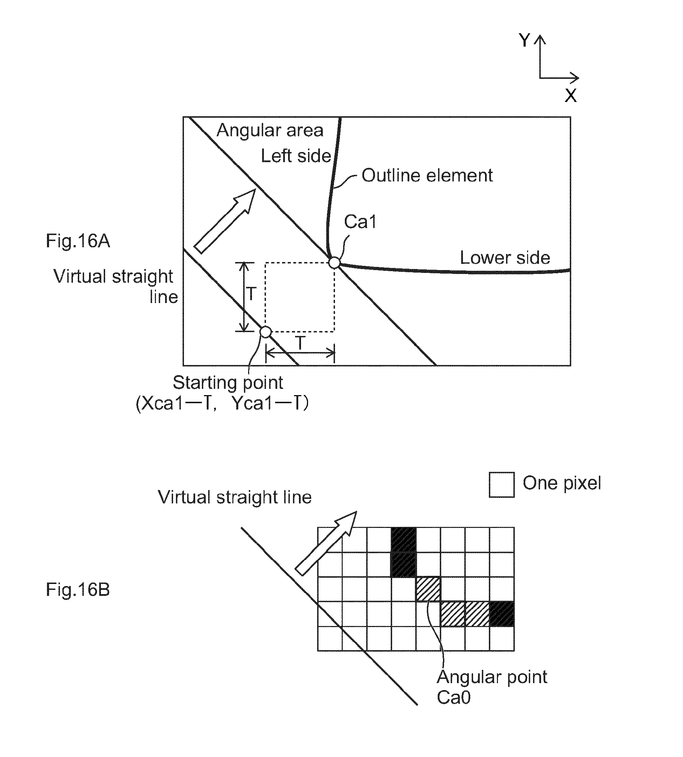

Thereafter, as shown in Fig. 16A, of the outline elements (pixels configuring the outline of the document) having been obtained by the outline element extraction (ST205) shown in Fig. 6, outline elements located within the angular area shown in Fig. 14 are extracted. Then, except the outline elements being passed through by the straight lines for angular point estimation shown in Figs. 15A to 15C, the outline elements within the angular area are removed.

Thereafter, an intersection point between the virtual straight line and the outline element is obtained within the angular area, the virtual straight line being tilted at a predetermined angle (45 degrees, in this example) with respect to both the X axis and the Y axis. At this time, as shown in Fig. 15A, intersection points between the virtual straight line and the outline elements are obtained while parallelly shifting the virtual straight line at predetermined intervals (one pixel, for example) from a starting point (Xca1-T,Yca1-T), which is a point displaced to both the X and Y directions by a predetermined value T (10 pixels, for example) from an intersection point Ca1 (Xca1,Yca1) between the horizontal-direction straight line for angular point estimation Lh1 and the vertical-direction straight line for angular point estimation Lv1.

In addition, in a case where the lower left angular point shown in Figs. 16A and 16B is extracted, the virtual straight line has an angle of -45 degrees with respect to the X axis. Also in a case of the upper right angular point, the virtual straight line has an angle of -45 degrees with respect to the X axis. On the other hand, in a case of the upper left and the lower right angular points, the virtual straight line has an angle of +45 degrees with respect to the X axis.

Herein, as shown as the example in Fig. 16A, when the lower side and the left side of the outline elements are connected, that is, when the pixels are continuous, one intersection point is selected as an angular point Ca0, the one intersection point being obtained at a position at which an intersection point is first detected by parallelly shifting the virtual straight line from the starting point. Further, as shown in Fig. 16B, there is a case where a plurality of intersection points is obtained, which are continuously arranged adjacent to each other at an angle of 45 degree. In such a case, a position that is a center of the plurality of continuous intersection points is selected as the angular point Ca0.

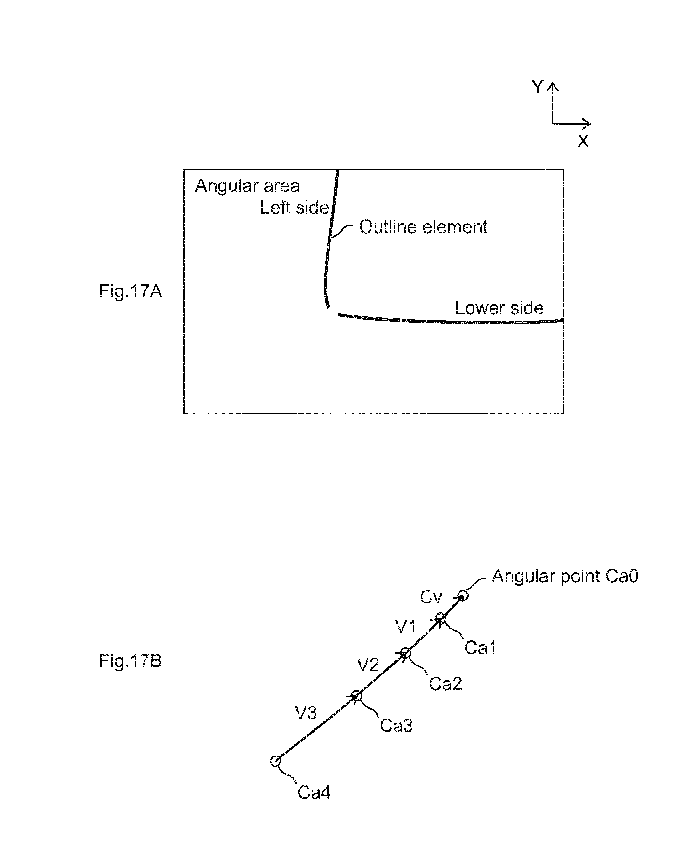

On the other hand, as shown as the example in Fig. 17A, when the lower side and the left side of the outline elements are not connected, that is, when the pixels are not continuous, intersection points Ca1 to Ca4 between the horizontal-direction straight lines for angular point estimation Lh1 to Lh4 and the vertical-direction straight lines for angular point estimation Lv1 to Lv4 are obtained as shown in Fig. 15. Based on the intersection points Ca1 to Ca4, the angular point Ca0 is estimated.

More specifically, as shown in Fig. 17B, vectors that sequentially connect each two of the intersection points Ca1 to Ca4 (V3 = Ca4 - Ca3, V2 = Ca3 - Ca2, and V1 = Ca2 - Ca1) are obtained. Then, from these three vectors V1 to V3, a variable value Cv (Cvx,Cvy) is obtained by the following formula. This variable value Cv (Cvx, Cvy) is added to the coordinate of the intersection point Ca1 to find the angular point Ca0.

$$Cv = (V3 \times k3 + V2 \times k2 + V1 \times k1) / 100$$

Herein, k1 to k3 are weight coefficients. The weight coefficient becomes greater as it is closer to an angular point. For example, k1 = 10, k2 = 6, and k3 = 3.

Furthermore, for convenience of description, Figs. 17A and 17B illustrate a sate in which the intersection points Ca1 to Ca4 have wide spacing among one another. However, in a case where the virtual straight line shown in Fig. 11 shifts at smaller intervals and there are a greater number of outline intersection points having smaller spacing in-between in a vicinity of the angular point, the intersection points Ca1 to Ca4 often exist close to one another or exist at the same position. In addition, in the present embodiment, five outline intersection points per edge are selected as the outline intersection points located in the angular area, and four straight lines for angular point estimation are set. Accordingly, there are four intersection points between the vertical-direction straight lines for angular point estimation and the horizontal-direction straight lines for angular point estimation, both of which are used for estimating the angular points. However, the number of the intersection points for estimating the angular points may be changed by modifying the shift interval for the virtual straight line and/or by modifying the number of the outline intersection points to be selected.

Furthermore, as shown in Figs. 15A to 15C, when an angle θ formed between the horizontal-direction straight line for angular point estimation Lh and the vertical-direction straight line for angular point estimation Lv falls outside a predetermined effective range, the angular point Ca obtained from the two straight lines for angular point estimation may be discarded so as not to be used for the angular point estimation shown in Figs. 16A to 17B. In such a case, the effective range of the angle θ is expressed by the following formula, for example.

$$(45°/ kk) < θ < (135° \times kk)$$

Herein, kk is an intersection point spacing coefficient. For example, when the spacing is four pixels, kk = 1. When the spacing is 10 pixels, kk = 0.9.

(Angular point adequacy determination)

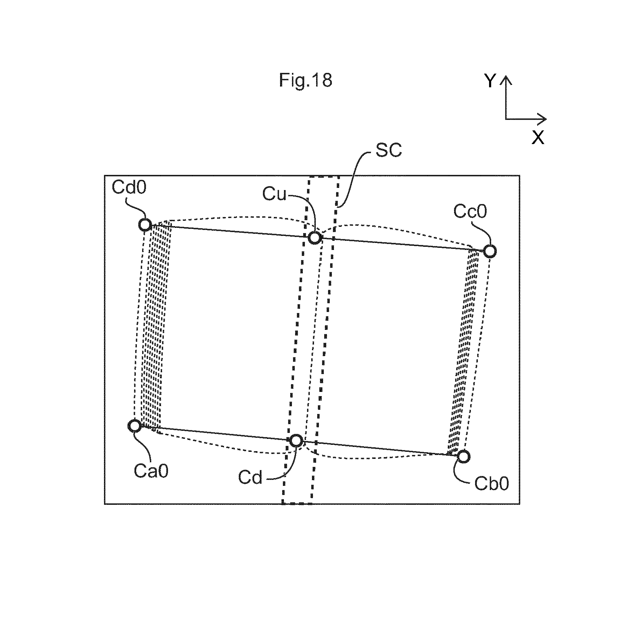

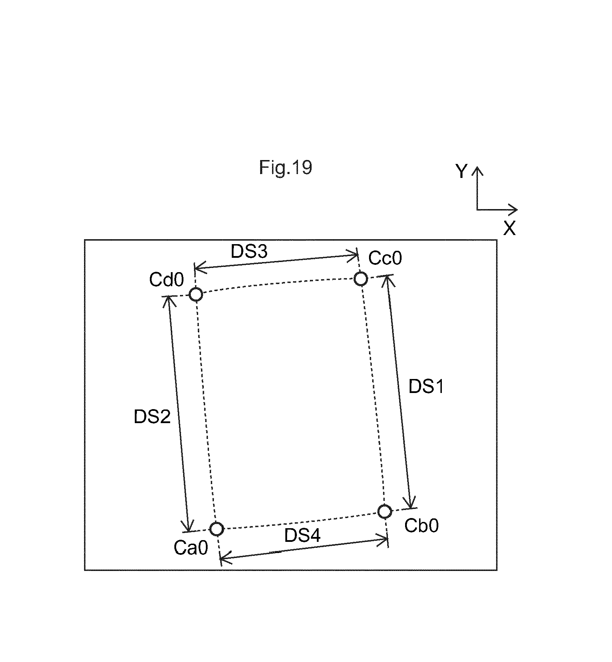

Next, the angular point adequacy determination (ST209) shown in Fig. 6 is described. Figs. 18 and 19 are schematic diagrams each illustrating a state of the angular point adequacy determination. This processing is performed by the angular point obtainer 45 shown in Fig. 2.

Herein, positions of the four angular points Ca0, Cb0, Cc0, and Cd0 obtained by the angular point obtainment (ST208) shown in Fig. 6 are compared with the document edge areas obtained by the document edge area obtainment (ST202) shown in Fig. 6. Then, it is determined whether or not the angular points Ca0, Cb0, Cc0, and Cd0 are adequate.

First, as shown in Fig. 18, a case of a two-page spread of a book is described. Herein, a central point Cu is a central point between the two angular points Cc0 and Cd0 on the upper side and a central point Cd is a central point between the two angular points Cb0 and Ca0 on the lower side, the four angular points Ca0, Cb0, Cc0, and Cd0 having been obtained by the angular point obtainment (ST208) shown in Fig. 6. In the case of the two-page spread, it is determined whether or not the central point Cu and the central point Cd each exist within the central document edge area SC where the binding of the pages is located. When both the central point Cu on the upper side and the central point Cd on the lower side are located within the central document edge area SC, it is determined that the obtained four angular points Ca0, Cb0, Cc0, and Cd0 are adequate.

When the central point Cu on the upper side or the central point Cd on the lower side is not located within the central document edge area SC, it is determined that the obtained four angular points Ca0, Cb0, Cc0, and Cd0 are not adequate. In such a case, each type of processing from the straight line element detection (ST201) to the outline intersection point extraction (ST207) shown in Fig. 6 is performed again with a modified parameter for each type of processing.

Herein, in a case where the central point Cu on the upper side is displaced to the left side to the document edge area SC, for example, there is a possibility that the upper right angular point Cc0 has been erroneously detected due to a reason such as lack of the outline information on the upper right corner. Thus, detection of the upper right angular point Cc0 is performed again by the angular point obtainment (ST208) shown in Fig. 6. At this time, the number of outline intersection points to be selected is modified. For example, in a case where, in the previous angular point obtainment, five outline intersection points per edge have been selected as outline intersection points located in the angular area, a change is made so as to select ten outline intersection points per edge.

Next, an explanation is provided in a case of a cover page of a book or a sheet document as shown in Fig. 19. In such a case, it is possible to determine that the obtained four angular points Ca0, Cb0, Cc0, and Cd0 are adequate when a quadrangle whose vertexes are the four angular points Ca0, Cb0, Cc0, and Cd0 obtained by the angular point detection (ST103) is roughly a parallelogram.

Specifically, when a ratio of lengths between mutually opposing two sides of a quadrangle whose vertexes are the four angular points Ca0, Cb0, Cc0, and Cd0 is smaller than a predetermined threshold value, it is determined that the four angular points Ca0, Cb0, Cc0, and Cd0 are adequate. More specifically, when both a ratio DS1/DS2 between the length of the right side DS1 and the length of the left side DS2 and a ratio DS3/DS4 between the length of the upper side DS3 and the length of the lower side DS4 are within a range of 0.7 to 1.3, it is determined as adequate. When the ratio DS1/DS2 or the ratio DS3/DS4 is less than or equal to 0.7 or more than or equal to 1.3, it is determined as not adequate. In this case, each type of processing from the straight line element detection (ST201) to the outline intersection point extraction (ST207) shown in Fig. 6 is performed again with a modified parameter for each type of processing.

[Outline obtainment]

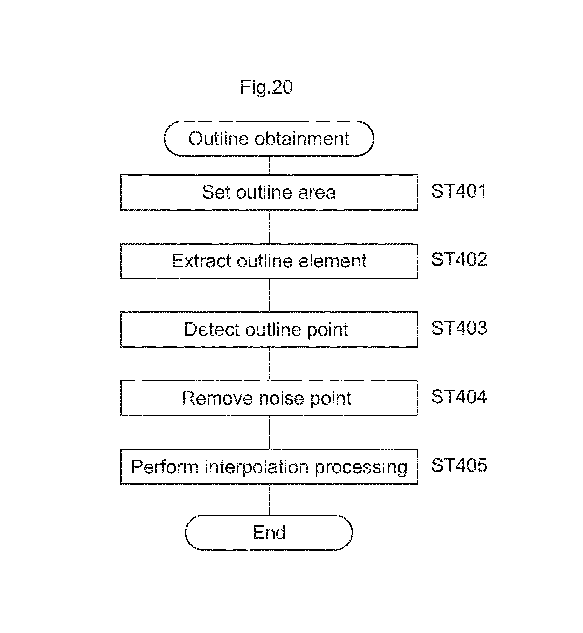

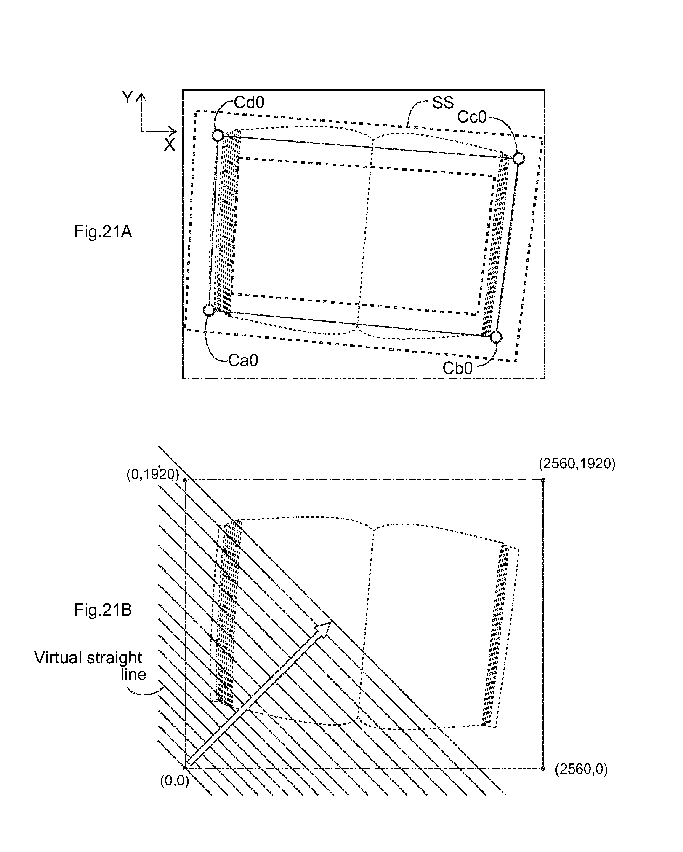

Next, the outline obtainment (ST104) shown in Fig. 3 is described. Fig. 20 is a flowchart illustrating steps of the outline obtainment. Figs. 21A to 22 are schematic diagrams each illustrating a sate of the outline obtainment. This processing is performed by the outline obtainer 32 shown in Fig. 2.

Herein, outline points (outline pixels) configuring the contour of the document, as shown in Fig. 4B, are obtained based on the four angular points Ca0, Cb0, Cc0, and Cd0 having been obtained by the angular point detection (ST103) shown in Fig. 3.

As shown in Fig. 21A, an outline area SS having a predetermined width is set centering around each side of the quadrangle whose vertexes are the four angular points Ca0, Cb0, Cc0, and Cd0 having been obtained by the angular point detection (ST103) shown in Fig. 3 (ST401). Then, of the outline elements having been extracted by the outline element extraction (ST205) shown in Fig. 6, only outline elements existing in the outline area SS are extracted (ST402).

Further, a histogram of pixel values of the pixels within the outline area SS may be obtained. Based on a result of an analysis on the histogram, a threshold value may be modified. With the modified threshold value, outline elements may be extracted again by performing the edge detection (ST204) and the outline element extraction (ST205) shown in Fig. 6. Thereby, singular points, which are edge points at the page top, bottom, left, and right shown in Fig. 5A, can be more accurately detected.

Next, of the outline elements existing in the outline area SS having been extracted by the outline element extraction (ST402) shown in Fig. 20, outline elements located on outermost sides are detected as outline points (ST403). Herein, the outermost outline points are detected with a procedure similar to the intersection point detection (ST206) shown in Fig. 6. Specifically, as shown in Fig. 21 B, the virtual straight lines tilting at a predetermined angle with respect to the X axis and the Y axis are parallelly shifted from the starting point, which are the four vertexes of the rectangular-shaped captured image, to the center of the captured image at a predetermined shift interval gradually. Thereby, intersection points between the outline elements extracted by the outline element extraction (ST402) and the virtual straight lines are collected. Herein, the shift interval of the virtual straight line is one pixel in the X direction.

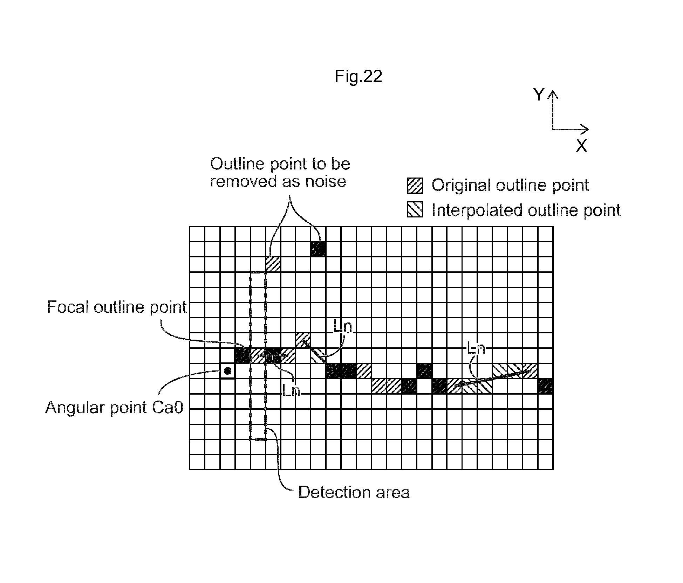

Next, as shown in Fig. 22, processing to sequentially search for outline points in a vicinity is repeated from the angular points Ca0, Cb0, Cc0, and Cd0. Then, outline points that are not in the vicinity are removed as noise (ST404).

Fig. 22 illustrates an example of processing that searches for outline points configuring the lower edge of the document outline. Herein, outline points whose position is displaced by one pixel in the X direction are sequentially searched starting from the outline point closest to the lower left angular point Ca0. At this time, an outline point for which a difference in the Y coordinate is less than or equal to a predetermined threshold value is searched. Specifically, at a position displaced by one pixel in the X direction from a focal outline point, an outline point existing in a detection area is searched centering around the same Y direction position as that of a focal pixel, the detection area being an area extended in both sides of the Y direction by the predetermined number of pixels (five pixels, for example).

This processing to search for the outline points configuring the lower edge of the document outline is started at the outline point closest to the lower left angular point Ca0 and is repeated until reaching the position of the X coordinate of the lower right angular point Cb0. In this processing, an outline point that is separated from an adjacent outline point by a predetermined distance or more, that is, an outline point located outside the detection area is removed as noise.

Herein, in a case where no outline point is found in a vicinity of the focal outline point, the next outline point is searched for at a position displaced from the focal outline point by one pixel in the X direction, setting a temporary outline point, which is a pixel located at the Y direction position same as that of the focal outline point.

After the above-described processing to search for the outline points configuring the lower edge of the document outline has been ended, next, processing to search for outline points configuring the right edge of the document outline is performed. In this processing with respect to the right edge, the processing that sequentially searches for outline points in a vicinity is repeatedly performed from the last outline point found in the processing with respect to the lower edge. At this time, at a position shifted from the focal outline point by one pixel in the Y direction, an outline point located within the detection area is searched centering around the Y direction position same as that of a focal pixel, the detection area being an area extended in both sides of the X direction by the predetermined number of pixels (five pixels, for example).

Herein, in a case where no outline point is found in the vicinity of the focal outline point, the next outline point is searched for at a position displaced from the focal outline point by one pixel in the Y direction, using a pixel in the X direction position same as that of the focal point as a temporary outline point.

This processing to search for the outline points configuring the right edge of the document outline is repeated until reaching the position of the Y coordinate of the upper right angular point Cc0. Then, processing to search for outline points configuring the upper and right edges of the document outline is sequentially performed. This processing with respect to the upper and right edges may be performed with a similar procedure. Thereby, outline points configuring a periphery of the document outline are searched, and outline points that do not match the periphery is removed as noise.

In the above-described noise point removal (ST404), there is a gap at a portion processed as the temporary outline point. Thus, next, interpolation processing is performed to fill the gap due to the temporary outline point (ST405). Herein, as shown in Fig. 22, an adjacent outline point is sequentially searched for with respect to the outline points remaining after the noise removal processing, starting from the outline point closest to the angular point Ca0. When an outline point having no adjacent outline point is found, an outline point closest to the outline point is searched for and the two outline points are connected with a straight line Ln. A pixel located on the straight line Ln is set as a new outline point. Thereby, it is possible to obtain an outline connecting the outer periphery of the document with no break as shown in Fig. 4B.

Further, although Fig. 22 illustrates an example where the lower edge of the outline is generated, the processing to fill gaps of the outline points is performed with respect to the right, upper, and lower edges also with a similar procedure. In addition, for a binary image such as a black and white image, only a position of an interpolating outline point may be obtained. However, for a multivalued image such as a color image or a grayscale image, a pixel value of an interpolating outline point needs to be obtained. In such a case, the pixel value of the interpolating outline point may be an average of pixel values of the two outline points connected by the straight line Ln.

Furthermore, in the present embodiment, an outline is generated to have a line width of one pixel. Performing processing such as smoothing, thickening of lines, and thinning of lines using this data may improve a performance of mesh model generation.

[Mesh model generation]

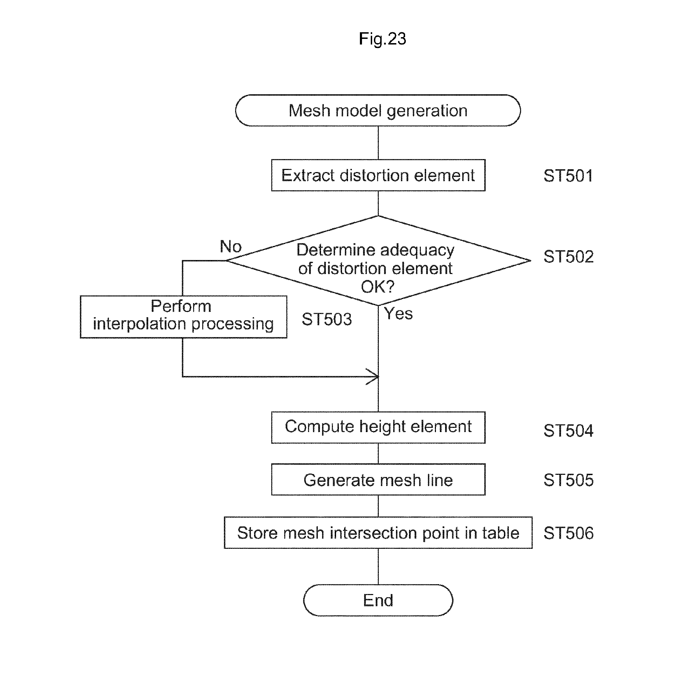

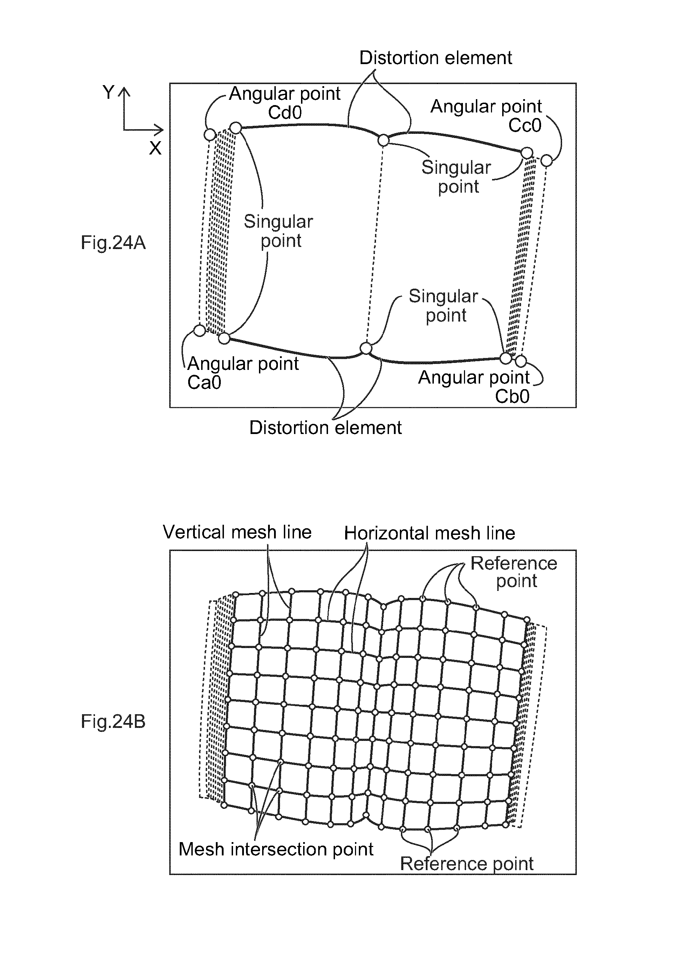

Next, the mesh model generation (ST105) shown in Fig. 3 is described. Fig. 23 is a flowchart illustrating steps of the mesh model generation. Figs. 24A and 24B are schematic diagrams each illustrating a state of the mesh model generation. This processing is performed by the mesh model generator 33 shown in Fig. 2.

First, as shown in Fig. 24A, based on the outline points having been obtained by the outline obtainment (ST104) shown in Fig. 3, the singular points are detected, the singular points being the edge points at the page top, bottom, left, and right. Herein, six singular points are detected as edge points at page top, bottom, left, and right in the captured image of the two-page spread. Of the six singular points, four singular points appear in the vicinity of the angular points Ca0, Cb0, Cc0, and Cd0 indicating four corners of the outer shape of the book, and two singular points appear in the central portion where there is the binding of the book.

Thereafter, distortion elements are extracted, the distortion elements indicating a distorted outline of a page of a book (ST501). The outlines of the upper and lower edges of the page are displayed in a distorted state where the outlines externally project. The distorted outline elements (pixels configuring the outline) of these upper and lower edges of the page are extracted form the edge image obtained by the edge detection (ST204) shown in Fig. 6. Then, adequacy of the distortion elements is determined based on continuity of the distortion elements (ST502). At this time, in a case where the distortion elements are determined as not adequate, interpolation processing is performed with respect to the disconnected portions (ST503). Thereby, the distorted elements become a continuous state having no break.

Thereafter, a computation is performed to convert the distortion elements into height elements (ST504). The outlines of the upper and lower edges of the page are shown in a distorted state in the captured image because the paper surface is three-dimensionally distorted so as to project upward. Thus, the height elements, which indicate three-dimensionally distorted state of the upper and lower edges of the page, can be obtained based on the distortion elements indicating the outlines of the upper and lower edges of the page. More specifically, the heights (coordinates of a Z axis) of the upper and lower edges of the page with respect to the placing surface 5 are obtained at regular intervals. Using the height elements, actual lengths of the upper and lower edges of the page can be estimated.

Thereafter, as shown in Fig. 24B, vertical and horizontal mesh lines are generated (ST505). The vertical mesh line and the horizontal mesh line intersect with each other at a mesh intersection point. A coordinate of the mesh intersection point is stored in a mesh table (ST506). Herein, based on the height elements of the upper and lower edges of the page, a coordinate of a reference point is obtained, the reference point dividing a curvature, which indicates the upper and lower edges of the page, into equal intervals according to the number of mesh. By connecting respective reference points on the upper and lower edges, a vertical mesh line is obtained. Then, a coordinate of a point (mesh intersection point) that divides the vertical meshes line into equal intervals according to the number of mesh is obtained. By connecting the points, the horizontal mesh line is obtained.

After the mesh model is generated as described above, image transformation is performed by the image transformer 34 to planarize the image based on the mesh model. At this time, by cutting out and planarizing only the image of the document area, an undistorted image of only the document area can be obtained. In addition, processing such as skew correction correcting a tilt of an image and the like is performed as needed.

Further, in the present embodiment, as shown in Fig. 2, the captured image data is transmitted from the book scanner to the PC, and processing to cut out an image is performed in the PC. However, it is also possible to configure a book scanner so as to perform such an image processing. In other words, a book scanner may be configured to include an image processing apparatus. In this case, an image may be displayed on a display such as a TV receiver or the like.

Furthermore, in the present embodiment, as shown in Fig. 11, the angle of the virtual straight line at the time of the intersection point detection is 45 degrees. However, the angle of the virtual straight line of the present invention is not limited to this, and may be properly set as needed.

In addition, in the present embodiment, an example is shown in which an image planarization is performed based on a generated mesh model. In a case of a cover page of a book or a sheet document, however, the image planarization is not required. In such a case, omitting the image planarization, processing to cut out only an image of a document area based on a contour of the document is performed, along with a skew correction as needed.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

## Claims

1. An image processing apparatus (2) comprising:

a captured image obtainer (22) obtaining a captured image of a paper surface of a document;
an outline element extractor (32) extracting an outline element of the document from the captured image;
an intersection point detector (43) obtaining an intersection point between a virtual straight line (L1-L4) and the outline element obtained by the outline element extractor, while parallelly shifting the virtual straight line at a predetermined shift interval, the virtual straight line being tilted at a predetermined angle with respect to coordinate axes extending along mutually orthogonally intersecting two edges of the rectangular-shaped captured image;
an outline intersection point obtainer (44) obtaining, as an outline intersection point, an intersection point located on an outermost side among the intersection points obtained by the intersection point detector; and
an angular point obtainer (45) obtaining an angular point (Ca0, Cb0, Cc0, Cd0) of a contour of the document based on the outline intersection point obtained by the outline intersection point obtainer, wherein
the contour of the document is obtained based on the angular point.

2. The image processing apparatus according to claim 1, wherein a mesh model is generated based on the obtained contour of the document, and the captured image is planarized based on the mash model.

3. The image processing apparatus according to claim 1, wherein the intersection point detector greatly shifts the virtual straight line at a first shift interval from a starting point until detection of an intersection point, and minutely shifts the virtual straight line at a second shift interval from a position immediately before the detected intersection point after the detection of the intersection point.

4. The image processing apparatus according to claim 1, further comprising:

a document edge area obtainer (4) obtaining, from the captured image, a document edge area in which an edge of the document is estimated to exist, wherein
of the intersection points obtained by the intersection point detector, an intersection point located outside the document edge area is removed as noise, the document edge area having been obtained by the document edge area obtainer.

5. The image processing apparatus according to claim 4, wherein the document edge area obtainer counts the number of a straight line element detected from the captured image, and obtains the document edge area based on the counted number of the straight line element.

6. A document scanning system, comprising:

the image processing apparatus (2) according to claim 1; and
an image inputting device (22) having a camera, wherein
the image inputting device captures an image of a document and transmits the captured image to the image processing apparatus.

7. An image processing method, comprising:

obtaining a captured image of a paper surface of a document;
extracting an outline element of the document from the captured image;
obtaining an intersection point between a virtual straight line (L1-L4) and the outline element, while parallelly shifting the virtual straight line at a predetermined shift interval, the virtual straight line being tilted at a predetermined angle with respect to coordinate axes extending along mutually orthogonally intersecting two edges of the rectangular-shape captured image;
obtaining, as an outline intersection point, an intersection point located on an outermost side among the obtained intersection points;
obtaining an angular point (Ca0, Cb0, Cc0, Cd0) of a contour of the document based on the obtained outline intersection point; and
obtaining the contour of the document based on the angular point.

Fig.1

Fig.2

EP 2 506 556 A2

Fig.3

```
                    ┌──────────────┐
                    │    Start      │
                    └──────┬───────┘
            ┌──────────────────────────┐
            │      Set document         │  ST101
            └──────────────┬───────────┘
            ┌──────────────────────────┐
            │      Input image          │  ST102
            └──────────────┬───────────┘
            ┌──────────────────────────┐
            │    Detect angular point    │  ST103
            └──────────────┬───────────┘
            ┌──────────────────────────┐
            │      Obtain outline        │  ST104
            └──────────────┬───────────┘
            ┌──────────────────────────┐
            │   Generate mesh model      │  ST105
            └──────────────┬───────────┘
            ┌──────────────────────────┐
            │     Transform image        │  ST106
            └──────────────┬───────────┘
            ┌──────────────────────────┐
            │      Display image         │  ST107
            └──────────────┬───────────┘
            ┌──────────────────────────┐
            │      Store image           │  ST108
            └──────────────┬───────────┘
                    ┌──────────────┐
                    │     End       │
                    └──────────────┘
```

Fig.4A

Y

X

Angular point
Cd0

Angular point
Cc0

Angular point
Ca0

Angular point
Cb0

Outline configured with a row of
continuously arranged outline points

Fig.4B

Angular point
Cd0

Angular point
Cc0

Angular point
Ca0

Angular point
Cb0

Y

X

Fig.5A

Vertical mesh line  Horizontal mesh line

Singular point

Singular point

Singular point

Mesh intersection point

Singular point

Planarized image

Fig.5B

Fig.6

```
               ┌─────────────────────────────┐
               │   Angular point detection   │
               └─────────────────────────────┘
                              │
    ┌──────────────────────────┐
    │  ┌───────────────────────────────────────┐
    │  │  ┌─────────────────────────────────┐
    │  │  │   Detect straight line element  │   ST201
    │  │  └─────────────────────────────────┘
    │  │                 │
    │  │  ┌─────────────────────────────────┐
    │  │  │   Obtain document edge area     │   ST202
    │  │  └─────────────────────────────────┘
    │  │                 │
    │  │             ╱        ╲
    │  │  No       ╱ Determine  ╲
    │  └────────╱   adequacy     ╲   ST203
    │            ╲  of angular   ╱
    │             ╲   point     ╱
    │              ╲   OK?     ╱
    │                    │ Yes
    │         ┌─────────────────────────────┐
    │         │        Detect edge          │   ST204
    │         └─────────────────────────────┘
    │                    │
    │         ┌─────────────────────────────┐
    │         │    Extract outline element  │   ST205
    │         └─────────────────────────────┘
    │                    │
    │         ┌─────────────────────────────┐
    │         │   Detect intersection point │   ST206
    │         └─────────────────────────────┘
    │                    │
    │         ┌─────────────────────────────┐
    │         │ Obtain outline intersection │   ST207
    │         │           point             │
    │         └─────────────────────────────┘
    │                    │
    │         ┌─────────────────────────────┐
    │         │      Obtain angular point   │   ST208
    │         └─────────────────────────────┘
    │                    │
    │              ╱        ╲
    │    No      ╱ Determine  ╲
    └─────────╱   adequacy     ╲   ST209
              ╲  of angular    ╱
               ╲   point      ╱
                ╲   OK?      ╱
                    │ Yes
         ┌─────────────────────────────┐
         │    Confirm angular point    │   ST210
         └─────────────────────────────┘
                    │
               ┌──────────┐
               │   End    │
               └──────────┘
```

Fig.7

Fig.8

```
        ┌────────────────────────────────────────────┐
        │         Document edge area obtainment        │
        └────────────────────────────────────────────┘
                              │
        ┌────────────────────────────────────────────┐
        │ Extract straight line element in vertical direction │   ST301
        └────────────────────────────────────────────┘
                              │
        ┌────────────────────────────────────────────┐
        │ Count number of straight line elements in vertical direction │
        │              Detect peak point                │   ST302
        │         Obtain approximate  straight line     │
        └────────────────────────────────────────────┘
                              │
              No      ◇ Number of lines OK? ◇   ST303
                              │ Yes
        ┌────────────────────────────────────────────┐
        │      Set page edge area in vertical direction │   ST304
        └────────────────────────────────────────────┘
                              │
        ┌────────────────────────────────────────────┐
        │ Extract straight line element in horizontal direction │   ST305
        └────────────────────────────────────────────┘
                              │
        ┌────────────────────────────────────────────┐
        │ Count number of straight line elements in horizontal direction │
        │              Detect peak point                │   ST306
        │         Obtain approximate  straight line     │
        └────────────────────────────────────────────┘
                              │
              No      ◇ Number of lines OK? ◇   ST307
                              │ Yes
        ┌────────────────────────────────────────────┐
        │     Set page edge area in horizontal direction │   ST308
        └────────────────────────────────────────────┘
                              │
                           ┌──────┐
                           │  End  │
                           └──────┘
```

Y↑
→X

(0,1920)                    (2560,1920)

y5

Detection line — SL          SC    SR

LC4                    CC4   RC4

Fig.9A   y4

LC3                    CC3   RC3

y3

LC2                    CC2   RC2

y2

y1

(0,0)

SLY            SCX            SRX        (2560,0)

Approximate    Approximate
straight line  straight line

Counted number

Fig.9B

X direction position

LC3        CC3        RC3

LX

24

Y

X

(0,1920)

Approximate straight line

(2560,1920)

SU

SUY

UC2    UC3    UC4

Fig.10A

Approximate
straight line

SD

SDY

DC4

DC2    DC3

(0,0)   x1              x2         x3         x4         x5

Detection line

(2560,0)

Counted number

8
7
6
5
4
3
2
1
0

Fig.10B

Y direction position

DC3              LY              UC3

Fig.11

Fig.12A

Y

X

Intersection point

SL    SC    SR

SU

Virtual
straight
line

SD

Fig.12B

Outline intersection point

Fig.13

O Outline intersection point

Y

X

p(n-4) ~o

p(n-3) ~o

p(n-2) ~o

Assign number in
counterclockwise direction

p(n-1) ~o

p3    Removed outline intersection point

p(n) ~o    p2→p(2)

Δy

p1→p(1)    Δx    p4→p(3)    p6→p(5)

p5→p(4)

(0,0)

Fig.14

Y
X

Smallest value of X coordinate          Greatest value of X coordinate

p(n-4)

p(n-3)

p(n-2)                                          Greatest value of
Y coordinate

Y1                                    Base area

p(n-1)

Y1×1.5          p(n)          p(1)   p(2)        p(3)   p(4)   p(5)

Angular area                              X1                    Smallest value of
Y coordinate

X1×1.5

Fig.15A

Fig.15B

Fig.15C

Y

X

Angular area

Left side

Outline element

Ca1

Lower side

Fig.16A

Virtual straight line

T

T

Starting point
(Xca1—T, Yca1—T)

One pixel

Virtual straight line

Fig.16B

Angular point
Ca0

Y
X

Fig.17A

Angular area
Left side
Outline element
Lower side

Fig.17B

Angular point Ca0
Cv
V1
Ca1
V2
Ca2
V3
Ca3
Ca4

Fig.18

Fig.19

Fig.20

```
       ┌──────────────────────────┐
       │   Outline obtainment     │
       └──────────────────────────┘
                    │
  ┌──────────────────────────────┐
  │       Set outline area       │   ST401
  └──────────────────────────────┘
                    │
  ┌──────────────────────────────┐
  │    Extract outline element   │   ST402
  └──────────────────────────────┘
                    │
  ┌──────────────────────────────┐
  │     Detect outline point     │   ST403
  └──────────────────────────────┘
                    │
  ┌──────────────────────────────┐
  │      Remove noise point      │   ST404
  └──────────────────────────────┘
                    │
  ┌──────────────────────────────┐
  │ Perform interpolation processing │   ST405
  └──────────────────────────────┘
                    │
       ┌──────────────────────────┐
       │           End            │
       └──────────────────────────┘
```

Fig.21A

Fig.21B

Virtual straight line

Fig.22

Y

X

Outline point to be
removed as noise

▨ Original outline point
◨ Interpolated outline point

Focal outline point

Ln

Ln

Angular point Ca0

Ln

Detection area

Fig.23

```
        ╭─────────────────────────────╮
        │    Mesh model generation    │
        ╰─────────────────────────────╯
                      │
        ┌─────────────────────────────┐
        │   Extract distortion element │      ST501
        └─────────────────────────────┘
                      │
              ╱───────────────────╲
   No        ╱  Determine adequacy  ╲        ST502
  ┌─────────<   of distortion element >
  │          ╲        OK?            ╱
  │           ╲───────────────────╱
  │    ┌──────────────────┐    │Yes
  │    │    Perform       │ ST503
  │    │interpolation     │
  │    │  processing      │
  │    └──────────────────┘    │
  │                            │
  └────────────────────────────>
                      │
        ┌─────────────────────────────┐
        │   Compute height element     │      ST504
        └─────────────────────────────┘
                      │
        ┌─────────────────────────────┐
        │     Generate mesh line       │      ST505
        └─────────────────────────────┘
                      │
        ┌─────────────────────────────────┐
        │ Store mesh intersection point in table │  ST506
        └─────────────────────────────────┘
                      │
        ╭─────────────────────────────╮
        │            End              │
        ╰─────────────────────────────╯
```

Fig.24A

Fig.24B

**REFERENCES CITED IN THE DESCRIPTION**

**Patent documents cited in the description**

• JP 2011078367 A

• JP 2006211046 A